# EUROPEAN PATENT SPECIFICATION

(11) **EP 4 328 862 B1**
(45) Date of publication and mention of the grant of the patent: **28.10.2026**
(21) Application number: 23192146.1
(22) Date of filing: 18.08.2023
(51) Int. Cl.: G06T 13/20

(54) **DENTAL TREATMENT SIMULATION DATA GENERATION APPARATUS, DATA GENERATION METHOD, AND DATA GENERATION PROGRAM**
APPAREIL, MÉTHODE ET PROGRAMME DE GÉNÉRATION DE DONNÉES DE SIMULATION DE TRAITEMENT DENTAIRE
GERÄT, VERFAHREN UND PROGRAMM ZUR ERZEUGUNG VON DATEN FÜR DIE SIMULATION VON ZAHNBEHANDLUNGSERGEBNISSEN

(30) Priority: 22.08.2022 JP 2022131607
(43) Date of publication of application: 28.02.2024
(73) Proprietor: J. MORITA MFG. CORP., Fushimi-ku Kyoto-shi Kyoto 612-8533 (JP)
(72) Inventor: YOSHIKAWA, Hideki, Kyoto, 612-8533 (JP); NISHIMURA, Yuu, Kyoto, 612-8533 (JP); YAMADA, Fuyuki, Kyoto, 612-8533 (JP)
(74) Representative: Müller Hoffmann & Partner

(56) References cited:
- US-A1- 2020 000 552
- US-A1- 2020 383 752
- ALEKSANDR AMIRKHANOV ET AL: "WithTeeth: Denture Preview in Augmented Reality", 1 January 2018 (2018-01-01), XP055574940, ISBN: 978-3-03868-072-7, Retrieved from the Internet <URL:https://www.cg.tuwien.ac.at/research/publications/2018/amirkhanov-2018-withteeth/amirkhanov-2018-withteeth-paper.pdf> DOI: 10.2312/VMV.20181250
- YANG WENWU ET AL: "Building anatomically realistic jaw kinematics model from data", VISUAL COMPUTER, SPRINGER, BERLIN, DE, vol. 35, no. 6, 15 May 2019 (2019-05-15), pages 1105 - 1118, XP036800804, ISSN: 0178-2789, [retrieved on 20190515], DOI: 10.1007/S00371-019-01677-8

## Description

### BACKGROUND OF THE INVENTION

### Field of the Invention

The present disclosure relates to a data generation apparatus, a data generation method, and a data generation program that generate simulation moving image data showing a face of a subject reflecting a simulation result of dental treatment.

### Description of the Background Art

A simulation showing changes in the facial appearance of a patient has been conventionally performed in dental treatment such as orthodontics. Such a simulation is important in terms of orthodontic prediction and explanation to the patient, and it is required to simulate the patient making facial expressions, in particular, the patient smiling in a more natural state.

Also, advances in image processing techniques by computers enable creation of a virtual three-dimensional surface model of the surface of the face of a patient. The surface model of the patient can be used to check changes in the shape of the face or a jaw movement caused by orthodontic treatment. For example, Japanese Patent Laying-Open No. 2017-176852 discloses a dental computed tomography apparatus capable of creating a virtual three-dimensional surface model of the face of a patient.
Further technological background can be found in US 2020/383752 A1, in "WithTeeth: Denture Preview in Augmented Reality", by Aleksandr Amirkhanov et al. (DOI: 10.2312/VMV.20181250), published in 2018, and US 2020/000552 A1.

### SUMMARY OF THE INVENTION

Although the dental computed tomography apparatus disclosed in Japanese Patent Laying-Open No. 2017-176852 can create the virtual three-dimensional surface model of the face of the patient, preparation is cumbersome due to the necessity of setting up a photographing station including a plurality of members such as a color camera, a laser device, and a lighting device. Thus, a technique that can easily and accurately perform a simulation of the face of a patient is required.

The present disclosure has been made to solve such a problem, and an object thereof is to provide a technique that can easily and accurately perform a simulation of a face after dental treatment. This is achieved by the claimed subject-matter, as captured in the appended claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram illustrating an application example of a data generation system and a data generation apparatus according to a first embodiment;
Fig. 2 is a block diagram illustrating a hardware configuration of the data generation apparatus according to the first embodiment;
Fig. 3 is a flowchart for describing an example of a data generation process executed by the data generation apparatus according to the first embodiment;
Fig. 4 is a diagram for describing processing details of STEP 1 in the data generation process;
Fig. 5 is a diagram for describing processing details of STEP 5 in the data generation process;
Fig. 6 is a diagram for describing processing details of STEP 7 and STEP 8 in the data generation process;
Fig. 7 is a diagram for describing the processing details of STEP 7 and STEP 8 in the data generation process;
Fig. 8 is a diagram for describing the processing details of STEP 7 and STEP 8 in the data generation process;
Fig. 9 is a diagram for describing the processing details of STEP 7 and STEP 8 in the data generation process;
Fig. 10 is a diagram for describing the processing details of STEP 7 and STEP 8 in the data generation process;
Fig. 11 is a diagram for describing processing details of STEP 9 in the data generation process;
Fig. 12 is a diagram for describing processing details of STEP 10 in the data generation process;
Fig. 13 is a diagram for describing processing details of STEP 11 in the data generation process;
Fig. 14 is a flowchart for describing an example of a data generation process executed by a data generation apparatus according to a second embodiment;
Fig. 15 is a flowchart for describing an example of a data generation process executed by a data generation apparatus according to a third embodiment;
Fig. 16 is a diagram for describing an outline of supervised learning executed by the data generation apparatus according to the third embodiment;
Fig. 17 is a diagram for describing an input and an output of the supervised learning in the data generation apparatus according to the third embodiment;
Fig. 18 is a diagram for describing the input and the output of the supervised learning in the data generation apparatus according to the third embodiment;
Fig. 19 is a flowchart for describing an example of a data generation process executed by a data generation apparatus according to a fourth embodiment;
Fig. 20 is a flowchart for describing an example of a data generation process executed by a data generation apparatus according to a fifth embodiment;
Fig. 21 is a diagram illustrating an application example of a data generation system and a data generation apparatus according to a sixth embodiment;
Fig. 22 is a diagram for describing an input and an output of supervised learning in a data generation apparatus according to a seventh embodiment; and
Fig. 23 is a diagram illustrating an example of input data of the supervised learning in the data generation apparatus according to the seventh embodiment.

### DESCRIPTION OF THE PREFERRED EMBODIMENTS

### <First Embodiment>

A first embodiment of the present disclosure will be described in detail with reference to the drawings. Identical or equivalent parts in the drawings are designated by the same reference signs to omit repetitive description.

### [Application Example]

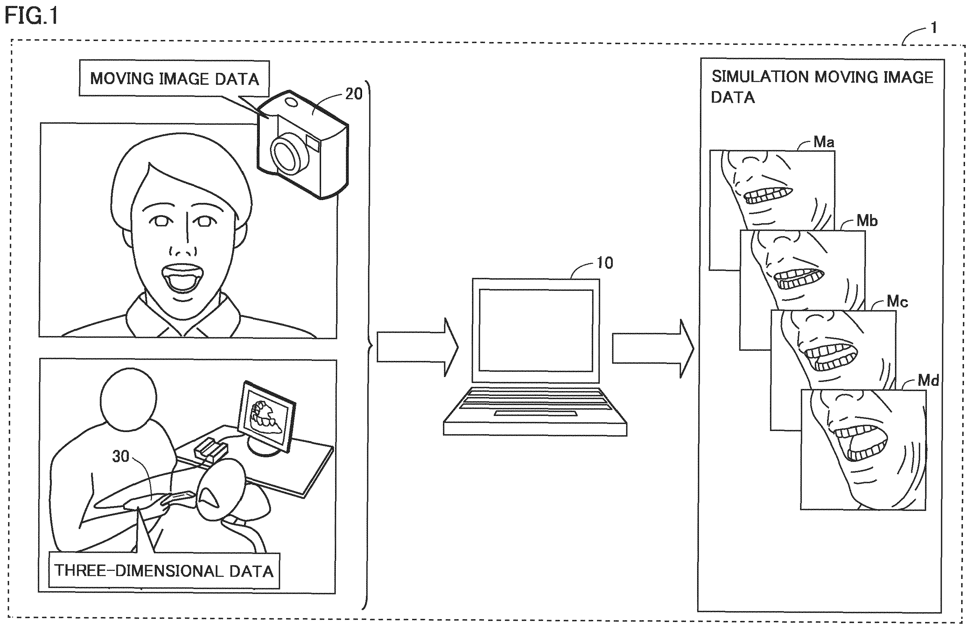

An application example of a data generation system 1 and a data generation apparatus 10 according to the first embodiment will be described with reference to Fig. 1. Fig. 1 is a diagram illustrating the application example of data generation system 1 and data generation apparatus 10 according to the first embodiment.

For example, a simulation showing changes in the facial appearance of a patient may be performed along with a simulation of dental treatment such as whitening, all-ceramic crowns, laminate veneers, metal bonds, cleaning, or facing crowns included in orthodontic or aesthetic treatment. Such a simulation is important in terms of orthodontic prediction and explanation to the patient, and it is required to simulate the patient making facial expressions, in particular, the patient smiling in a more natural state. Thus, data generation system 1 and data generation apparatus 10 according to the first embodiment are configured to easily and accurately perform a simulation of the face of a subject after dental treatment using moving image data obtained by photographing the subject with a partial teeth row of an upper and/or lower teeth row exposed and three-dimensional data of the upper and/or lower teeth row of the subject.

Specifically, as illustrated in Fig. 1, data generation system 1 includes a camera 20 capable of capturing a moving image, a three-dimensional scanner 30 capable of obtaining three-dimensional data of the subject, and data generation apparatus 10.

Camera 20 may be any camera capable of capturing a moving image of the subject (e.g., an RGB camera), such as a digital camera or a video camera. In the first embodiment, a monocular camera is described as an example of camera 20. Moving image data obtained by camera 20 includes a plurality of frame images arranged in chronological order. The frame image is one still image showing an object to be photographed (e.g., the face of the subject) in two dimensions viewed from the viewpoint of camera 20 pointed at the object to be photographed. For example, when a frame rate of camera 20 is set at 24 fps, the moving image data obtained by camera 20 includes 24 frame images per second. To check a jaw movement with higher temporal resolution, for example, a camera with a high frame rate, such as 120 fps or 240 fps, may be used as camera 20.

Three-dimensional scanner 30 is an intra oral scanner (IOS) capable of optically imaging an oral cavity of the subject by a confocal method or a triangulation method. Specifically, three-dimensional scanner 30 scans the oral cavity to obtain, as three-dimensional data, positional information (coordinates of vertical-direction, horizontal-direction, and height-direction axes) of each of grouped points (a plurality of points) showing the surface of the object to be photographed (object) in the oral cavity using an optical sensor or the like. That is, the three-dimensional data is position data including the positional information of each of the grouped points constituting the surface of the object to be scanned (e.g., the upper and/or lower teeth row in the oral cavity) placed in a certain coordinate space. When three-dimensional scanner 30 scans the upper and/or lower teeth row in the oral cavity, three-dimensional data including the positional information of each of the grouped points showing the surface of the upper and/or lower teeth row is obtained. Such three-dimensional data enables identification of a shape of the object (upper and/or lower teeth row) placed in the coordinate space. In the following description, a collection of three-dimensional data that enables the identification of the shape of the object (upper and/or lower teeth row) placed in the coordinate space is also referred to as "shape data". Data that enables identification of the position of the object (upper and/or lower teeth row) placed in the coordinate space is also referred to as "position data".

A user takes a moving image of the subject with a partial teeth row of the upper and/or lower teeth row exposed using camera 20. Further, the user can obtain three-dimensional data of the upper and/or lower teeth row in the oral cavity by scanning the oral cavity of the subject using three-dimensional scanner 30. The moving image data obtained by camera 20 and the three-dimensional data obtained by three-dimensional scanner 30 are input to data generation apparatus 10. Not only the moving image data obtained by photographing the subject, but also, for example, a plurality of still images obtained by continuously photographing the subject in chronological order may be input to data generation apparatus 10.

The "user" includes operators (e.g., doctors) or assistants (e.g., dental assistants, dental technicians, and nurses) in various fields including dentistry, oral surgery, orthopedics, plastic surgery, and cosmetic surgery. The "subject" includes patients of dentistry, oral surgery, orthopedics, plastic surgery, and cosmetic surgery. The "upper and/or lower teeth row" includes both of the upper teeth row and the lower teeth row in the oral cavity or one of the upper teeth row and the lower teeth row. In other words, the "upper and/or lower teeth row" includes at least one of the upper teeth row and the lower teeth row. The "partial teeth row of the upper and/or lower teeth row" includes both of a partial teeth row included in the upper teeth row and a partial teeth row included in the lower teeth row or one of a partial teeth row included in the upper teeth row and a partial teeth row included in the lower teeth row. In other words, the "partial teeth row of the upper and/or lower teeth row" includes at least one of the partial teeth row included in the upper teeth row and the partial teeth row included in the lower teeth row.

Data generation apparatus 10 generates simulation moving image data (moving image data including frame images Ma, Mb, Mc, and Md illustrated in Fig. 1) showing changes in the facial appearance of the patient with dental treatment performed thereon, based on the moving image data of the subject obtained by camera 20 and the three-dimensional data of the upper and/or lower teeth row of the subject obtained by three-dimensional scanner 30.

This enables the user to obtain the simulation moving image data showing the face of the subject reflecting a simulation result of dental treatment using the moving image data obtained by photographing the subject with the partial teeth row of the upper and/or lower teeth row exposed and the three-dimensional data of the upper and/or lower teeth row of the subject. Thus, it is possible to easily and accurately perform the simulation of the face of the subject after dental treatment.

### [Hardware Configuration of Data Generation Apparatus]

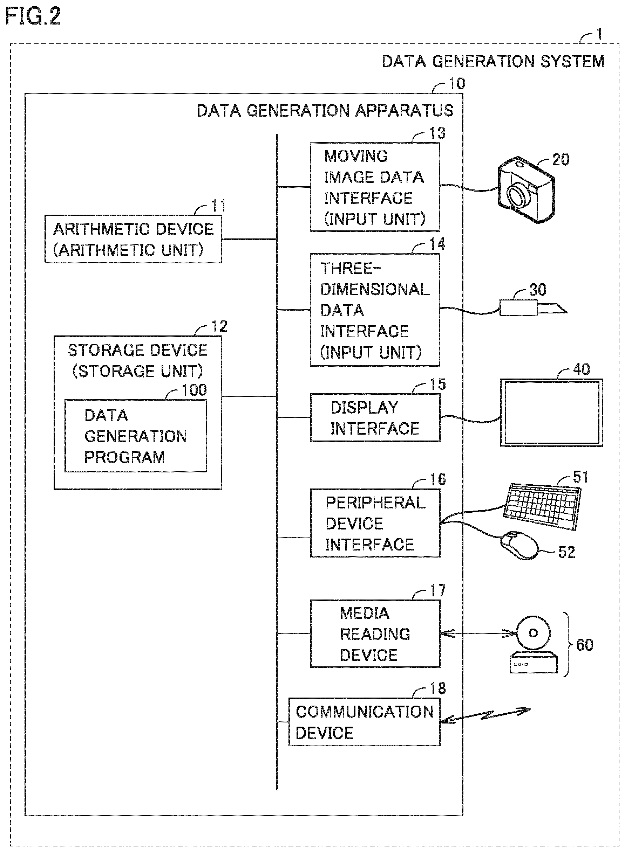

With reference to Fig. 2, a hardware configuration of data generation apparatus 10 according to the first embodiment will be described. Fig. 2 is a block diagram illustrating the hardware configuration of data generation apparatus 10 according to the first embodiment. Data generation apparatus 10 may be implemented by, for example, a general-purpose computer or a computer dedicated to data generation system 1.

As illustrated in Fig. 2, data generation apparatus 10 includes, as main hardware elements, an arithmetic device 11, a storage device 12, a moving image data interface 13, a three-dimensional data interface 14, a display interface 15, a peripheral device interface 16, a media reading device 17, and a communication device 18.

Arithmetic device 11 is an arithmetic entity (computer) that executes various programs to execute various processes and is an example of an "arithmetic unit". Arithmetic device 11 includes, for example, a processor such as a central processing unit (CPU) or a micro-processing unit (MPU). While the processor, which is an example of arithmetic device 11, has the functions of executing programs to execute various processes, some or all of these functions may be implemented using a dedicated hardware circuit such as an application specific integrated circuit (ASIC) or a field-programmable gate array (FPGA). The "processor" is not limited to a processor in the narrow sense that executes a process in a stored-program manner, such as a CPU or an MPU, and may include a hard-wired circuit such as an ASIC or an FPGA. Thus, the "processor", which is an example of arithmetic device 11, can also be read as processing circuitry where a process is predefined by computer-readable code and/or a hard-wired circuit. Arithmetic device 11 may include a single chip or a plurality of chips. Furthermore, some of the functions of arithmetic device 11 may be provided in a server apparatus (not illustrated, e.g., a cloud server apparatus).

Storage device 12 includes a volatile storage area (e.g., a working area) that temporarily stores a program code, a work memory, or the like when arithmetic device 11 executes any program. Storage device 12 may be one or more non-transitory computer readable media. For example, storage device 12 includes volatile memories such as a dynamic random access memory (DRAM) and a static random access memory (SRAM) or nonvolatile memories such as a read only memory (ROM) and a flash memory. Also, storage device 12 may be one or more computer readable storage media. For example, storage device 12 may be a solid state drive (SSD) or a hard disk drive (HDD). In this case, arithmetic device 11 may include volatile memories such as a DRAM and an SRAM or nonvolatile memories such as ROM and a flash memory.

In an example described in the first embodiment, the volatile storage area and the nonvolatile storage area are both included in storage device 12. However, the volatile storage area and the nonvolatile storage area may be included in different storage units. For example, arithmetic device 11 may include the volatile storage area, and storage device 12 may include the nonvolatile storage area. Data generation apparatus 10 may include a microcomputer including arithmetic device 11 and storage device 12.

Storage device 12 stores a data generation program 100. Data generation program 100 describes details of a data generation process for arithmetic device 11 to generate the simulation moving image data showing the face of the subject reflecting a simulation result of dental treatment based on the moving image data of the subject and the three-dimensional data of the upper and/or lower teeth row of the subject.

Moving image data interface 13 is an interface for connecting camera 20 and is an example of an "input unit". Moving image data interface 13 enables input and output of data (e.g., moving image data) between data generation apparatus 10 and camera 20. Data generation apparatus 10 and camera 20 are connected via wired connection using a cable or wireless connection (WiFi, BlueTooth (registered trademark), or the like).

Three-dimensional data interface 14 is an interface for connecting three-dimensional scanner 30 and is an example of the "input unit". Three-dimensional data interface 14 enables input and output of data (e.g., three-dimensional data) between data generation apparatus 10 and three-dimensional scanner 30. Data generation apparatus 10 and three-dimensional scanner 30 are connected via wired connection using a cable or wireless connection (WiFi, BlueTooth (registered trademark), or the like).

Display interface 15 is an interface for connecting a display 40. Display interface 15 enables input and output of data between data generation apparatus 10 and display 40.

Peripheral device interface 16 is an interface for connecting peripheral devices such as a keyboard 51 and a mouse 52. Peripheral device interface 16 enables input and output of data between data generation apparatus 10 and the peripheral devices.

Media reading device 17 reads various types of data stored in a removable disk 60, which is a storage medium, and writes various types of data to removable disk 60. The storage medium exemplified by removable disk 60 is a non-transitory and tangible computer readable storage medium and may be any form of storage medium that can store various types of data, such as a compact disc (CD), a digital versatile disc (DVD), or a universal serial bus (USB) memory. For example, media reading device 17 may obtain data generation program 100 from removable disk 60 or write the simulation moving image data generated by arithmetic device 11 to removable disk 60.

Communication device 18 transmits and receives data to and from an external device via wired communication or wireless communication. For example, communication device 18 may transmit the simulation moving image data generated by arithmetic device 11 to the external device.

### [Data Generation Process]

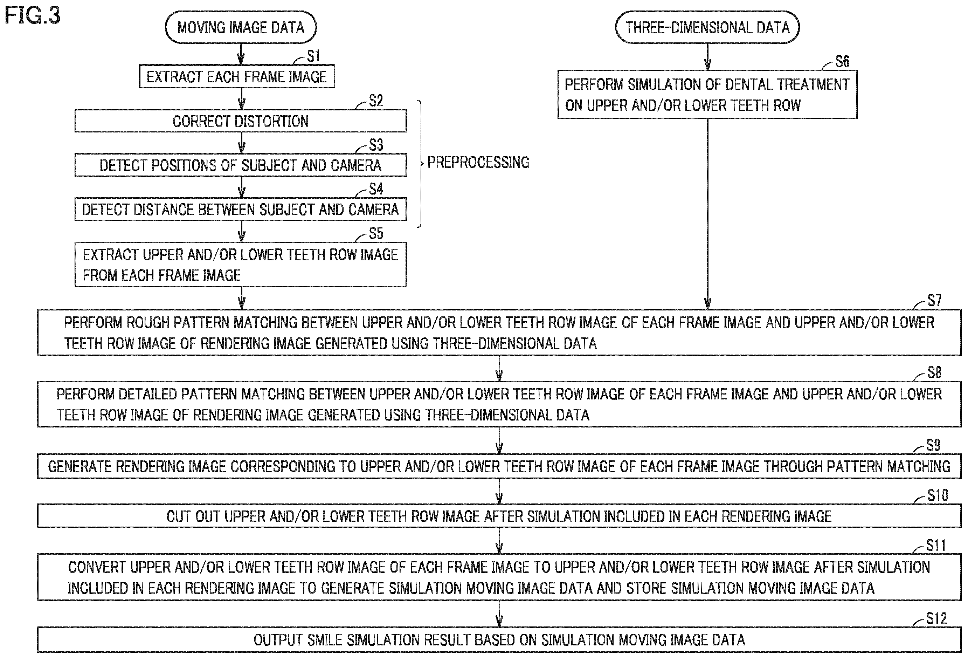

With reference to Figs. 3 to 13, the data generation process executed by data generation apparatus 10 according to the first embodiment will be described. In an example described as the data generation process according to the first embodiment illustrated in Figs. 3 to 13, the simulation moving image data showing changes in the facial appearance of the patient with dental treatment performed thereon is generated through pattern matching using each frame image included in the moving image data. Fig. 3 is a flowchart for describing an example of the data generation process executed by data generation apparatus 10 according to the first embodiment. Each STEP (hereinbelow, referred to as "S") illustrated in Fig. 3 is implemented by arithmetic device 11 of data generation apparatus 10 executing data generation program 100.

As illustrated in Fig. 3, after input of moving image data of the subject obtained by camera 20, data generation apparatus 10 extracts a plurality of frame images constituting the moving image data from the moving image data (S 1).

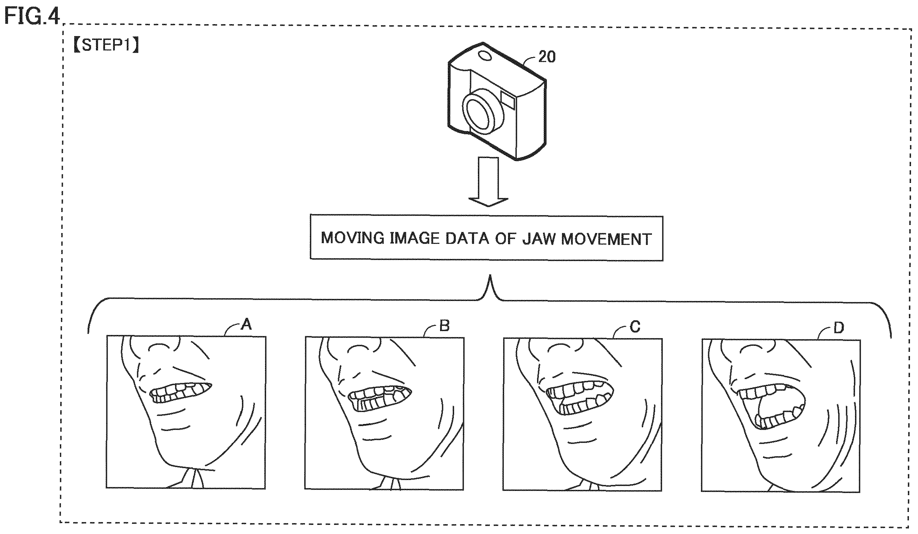

For example, Fig. 4 is a diagram for describing processing details of STEP 1 in the data generation process. As illustrated in Fig. 4, when camera 20 captures a moving image of the subject smiling with a partial teeth row exposed, the moving image data obtained by camera 20 includes a plurality of frame images A, B, C, and D showing the subject smiling with the partial teeth row exposed. For example, frame image A includes the partial teeth row with the upper and lower teeth rows closed, and frame images B to D include the partial teeth row with the upper and lower teeth rows open. Frame images A to D show a state of the upper and lower teeth rows changing from a closed state to an open state. A position (viewpoint) of camera 20 and a position of the object to be photographed are not necessarily fixed while the moving image of the subject is being captured. Thus, the upper and lower teeth rows shown by frame images A to D obtained in chronological order may look differently from the camera position. Data generation apparatus 10 extracts such frame images showing the state of the subject with the upper and lower teeth rows gradually changing from the closed state to the open state from the moving image data obtained by camera 20.

Referring back to Fig. 3, in S2 to S4, data generation apparatus 10 executes preprocessing for generating simulation moving image data showing the face of the subject reflecting a simulation result of dental treatment.

Specifically, when distortion corresponding to a lens of camera 20 occurs in at least one of the frame images, data generation apparatus 10 corrects the distortion in the at least one frame image (S2). Data generation apparatus 10 can improve the accuracy of pattern matching between the shape of the upper and/or lower teeth row included in the frame image and the shape of the upper and/or lower teeth row embodied based on the three-dimensional data obtained by three-dimensional scanner 30 (described further below) by performing such distortion correction.

Data generation apparatus 10 detects the position of each of the object to be photographed (e.g., the face of the subject) and camera 20 (S3). Data generation apparatus 10 can improve the accuracy of the pattern matching (described further below), and also reduce the processing load of the pattern matching and shorten the processing time for the pattern matching by using the position of each of the object to be photographed and camera 20 for the pattern matching. Data generation apparatus 10 may obtain the position of each of the object to be photographed and camera 20 at the start of or during the photographing by camera 20 and store the obtained position in storage device 12. In the process of S3, data generation apparatus 10 may search for and obtain the position of each of the object to be photographed and camera 20 stored in camera 20 or search for and obtain the position of each of the object to be photographed and camera 20 stored in storage device 12.

Data generation apparatus 10 detects a distance between the object to be photographed (e.g., the face of the subject) and camera 20 (S4). Data generation apparatus 10 can reduce the processing load of the pattern matching (described further below) and shorten the processing time for the pattern matching by using the distance between the object to be photographed and camera 20 for the pattern matching. Data generation apparatus 10 may obtain the distance between the object to be photographed and camera 20 at the start of or during the photographing by camera 20 and store the obtained distance in storage device 12. In the process of S4, data generation apparatus 10 may search for and obtain the distance stored in camera 20 or search for and obtain the distance stored in storage device 12.

Data generation apparatus 10 may perform the pattern matching (described further below) based on at least one of the positional relationship between the object to be photographed and camera 20 obtained in S3 and the distance between the object to be photographed and camera 20.

Data generation apparatus 10 extracts an upper and/or lower teeth row image corresponding to the upper and/or lower teeth row from each of the frame images extracted in S1 (S5).

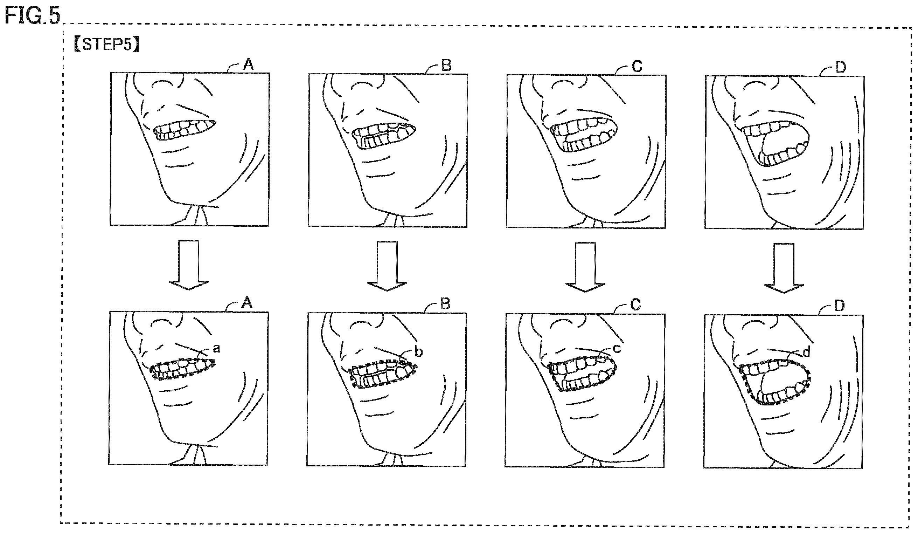

For example, Fig. 5 is a diagram for describing processing details of STEP 5 in the data generation process. As illustrated in Fig. 5, data generation apparatus 10 extracts the upper and/or lower teeth row image corresponding to the upper and/or lower teeth row from each of frame images A, B, C, and D. For example, data generation apparatus 10 compares a template image showing the shape of the upper and/or lower teeth row, the template image being previously stored, with each of frame images A, B, C, and D and extracts the upper and/or lower teeth row image from each of frame images A, B, C, and D through pattern matching. Data generation apparatus 10 may extract the upper and/or lower teeth row image from each of frame images A, B, C, and D not through the pattern matching that makes a comparison of the shape of the upper and/or lower teeth row, but through pattern matching that makes a comparison of the edge shape of the upper and/or lower teeth row. Further, the "upper and/or lower teeth row image" is an image including both of the upper teeth row and the lower teeth row in the oral cavity or one of the upper teeth row and the lower teeth row. The "upper and/or lower teeth row image" is an image including a partial teeth row of the upper and/or lower teeth row.

Data generation apparatus 10 extracts an upper and/or lower teeth row image a showing the upper and/or lower teeth row of the subject from a part of the face of the subject included in frame image A. Data generation apparatus 10 extracts an upper and/or lower teeth row image b showing the upper and/or lower teeth row of the subject from a part of the face of the subject included in frame image B. Data generation apparatus 10 extracts an upper and/or lower teeth row image c showing the upper and/or lower teeth row of the subject from a part of the face of the subject included in frame image C. Data generation apparatus 10 extracts an upper and/or lower teeth row image d showing the upper and/or lower teeth row of the subject from a part of the face of the subject included in frame image D.

Referring back to Fig. 3, after input of the three-dimensional data of the upper and/or lower teeth row of the subject obtained by three-dimensional scanner 30, data generation apparatus 10 performs a simulation of dental treatment on the upper and/or lower teeth row (S6). Specifically, data generation apparatus 10 converts the input three-dimensional data of the upper and/or lower teeth row to update the input three-dimensional data of the upper and/or lower teeth row before the dental treatment to three-dimensional data of the upper and/or lower teeth row after the dental treatment.

Data generation apparatus 10 generates a plurality of rendering images including the upper and/or lower teeth row in two dimensions viewed from multiple directions based on the three-dimensional data after the simulation of the upper and/or lower teeth row with the dental treatment performed thereon. The "rendering image" is an image generated by performing processing or editing on certain data. In the first embodiment, the "rendering image" is a two-dimensional image generated by performing processing or editing on the three-dimensional data after the simulation.

As described above, the three-dimensional data obtained by three-dimensional scanner 30 includes the positional information of each of the grouped points showing the surface of the upper and/or lower teeth row of the subject. Thus, the three-dimensional data after the simulation also includes the positional information of each of the grouped points showing the upper and/or lower teeth row with the dental treatment performed thereon. Data generation apparatus 10 can generate the rendering image showing the upper and/or lower teeth row in two dimensions viewed from a certain viewpoint by imaging the grouped points showing the surface of the upper and/or lower teeth row after the dental treatment using the three-dimensional data after the simulation. Furthermore, data generation apparatus 10 can generate a plurality of rendering images including the upper and/or lower teeth row in two dimensions viewed from multiple directions by changing the viewpoint in the multiple directions.

While generating the rendering images including the upper and/or lower teeth row in two dimensions viewed from the multiple directions based on the three-dimensional data after the simulation, data generation apparatus 10 performs rough pattern matching between the upper and/or lower teeth row image included in each of the frame images extracted in S5 and an upper and/or lower teeth row image included in each of the rendering images (S7) and further performs detailed pattern matching between the upper and/or lower teeth row image included in each of the frame images extracted in S5 and the upper and/or lower teeth row image included in each of the rendering images (S8).

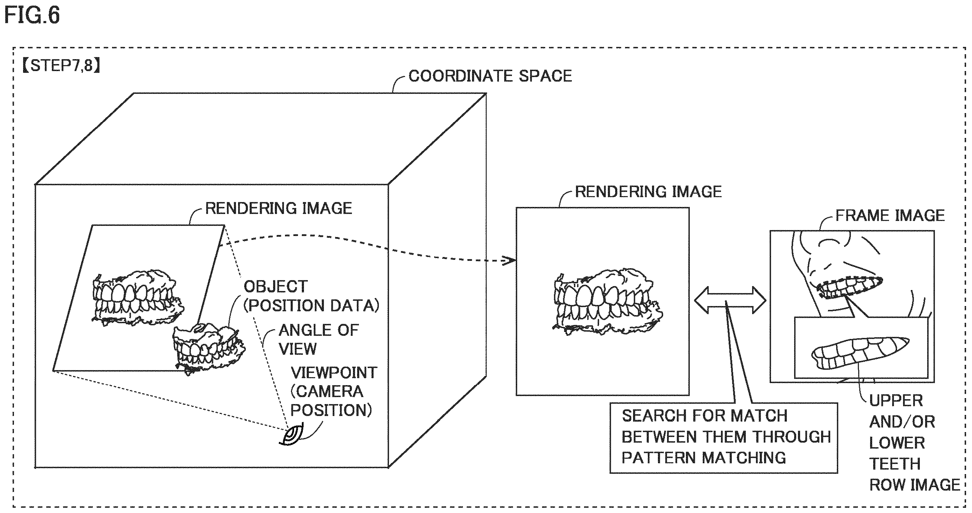

For example, Figs. 6 to 10 are diagrams for describing processing details of STEP 7 and STEP 8 in the data generation process. As illustrated in Fig. 6, data generation apparatus 10 can generate a plurality of rendering images including the upper and/or lower teeth row in two dimensions viewed from multiple directions in the horizontal direction or the vertical direction by virtually viewing the object (upper and/or lower teeth row) that can be identified based on the three-dimensional data and is placed in a coordinate space while changing the viewpoint (the position of camera 20) and the angle of view. Then, data generation apparatus 10 searches for the rendering image including the upper and/or lower teeth row image that matches in appearance the upper and/or lower teeth row image included in each of the frame images through pattern matching to generate (extract) the rendering image corresponding to the upper and/or lower teeth row image included in each of the frame images. The "searching" means finding the rendering image that matches the upper and/or lower teeth row image included in the frame image from the rendering images by trying pattern matching between each of the rendering images and the upper and/or lower teeth row image included in the frame image one or more times. When data generation apparatus 10 generates the rendering image corresponding to the upper and/or lower teeth row image included in the frame image, data generation apparatus 10 stores position data of the object (upper and/or lower teeth row) at the time the rendering image is generated. Alternatively, data generation apparatus 10 stores a change in the position data of the object (upper and/or lower teeth row) (a movement amount of the object) at the time each rendering image corresponding to each frame image is generated.

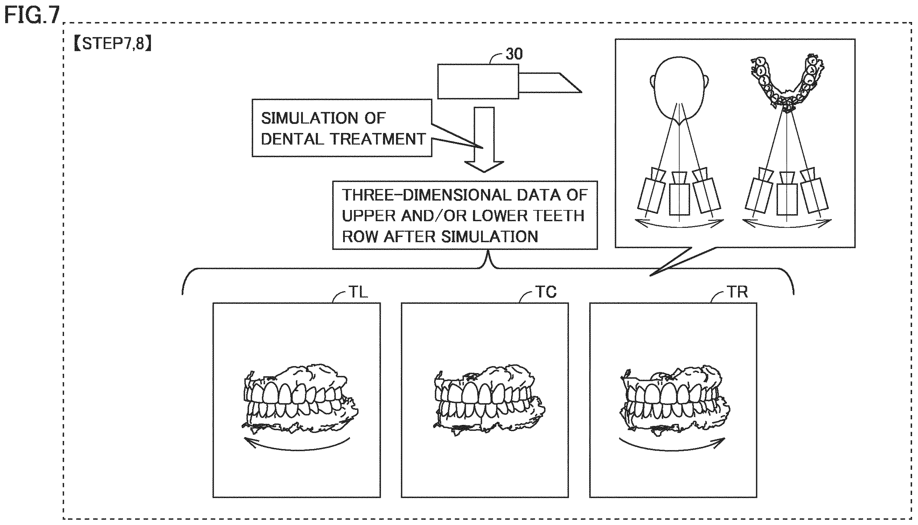

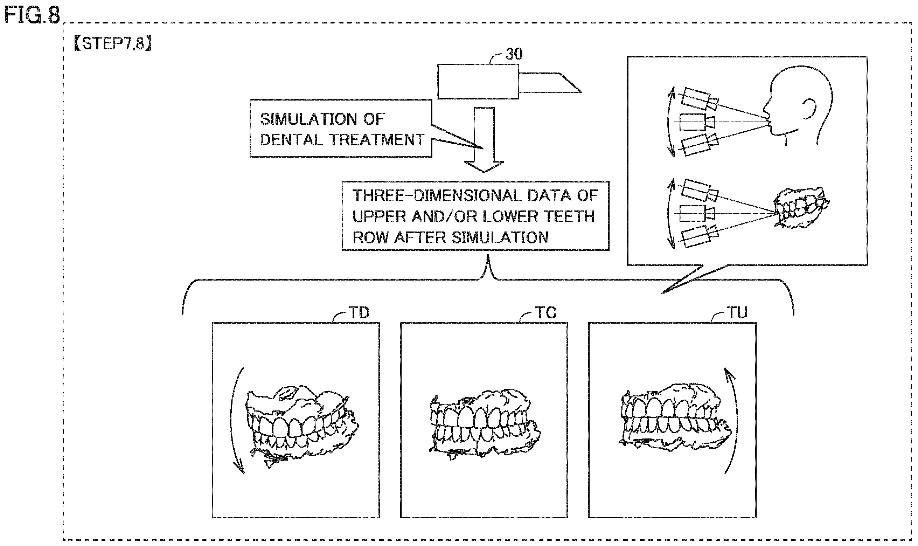

With reference to Figs. 7 and 8, an example of the generation of the rendering image will be described. As illustrated in Fig. 7, data generation apparatus 10 generates each rendering image including the upper and/or lower teeth row in two dimensions viewed from each viewpoint in the horizontal direction assuming that the viewpoint in generating the rendering image is moved in stages in the horizontal direction from the viewpoint facing the front of the face (upper and/or lower teeth row) of the subject.

Specifically, data generation apparatus 10 generates a rendering image TC including the upper and/or lower teeth row in two dimensions viewed from the front of the face (upper and/or lower teeth row) of the subject based on the three-dimensional data after the simulation. Data generation apparatus 10 generates a rendering image TL including the upper and/or lower teeth row in two dimensions viewed from the viewpoint slightly tilted leftward in the horizontal direction from the front of the face (upper and/or lower teeth row) of the subject (e.g., viewed from the viewpoint tilted leftward by 10 degrees in the horizontal direction from the front) based on the three-dimensional data after the simulation. Data generation apparatus 10 generates a rendering image TR including the upper and/or lower teeth row in two dimensions viewed from the viewpoint slightly tilted rightward in the horizontal direction from the front of the face (upper and/or lower teeth row) of the subject (e.g., viewed from the viewpoint tilted rightward by 10 degrees in the horizontal direction from the front) based on the three-dimensional data after the simulation.

As illustrated in Fig. 8, data generation apparatus 10 generates each rendering image including the upper and/or lower teeth row in two dimensions viewed from each viewpoint in the vertical direction assuming that the viewpoint in generating the rendering image is moved in stages in the vertical direction from the viewpoint facing the front of the face (upper and/or lower teeth row) of the subject.

Specifically, data generation apparatus 10 generates rendering image TC including the upper and/or lower teeth row in two dimensions viewed from the front of the face (upper and/or lower teeth row) of the subject based on the three-dimensional data after the simulation. Data generation apparatus 10 generates a rendering image TD including the upper and/or lower teeth row in two dimensions viewed from the viewpoint slightly tilted downward in the vertical direction from the front of the face (upper and/or lower teeth row) of the subject (e.g., viewed from the viewpoint tilted downward by 10 degrees in the vertical direction from the front) based on the three-dimensional data after the simulation. Data generation apparatus 10 generates a rendering image TU including the upper and/or lower teeth row in two dimensions viewed from the viewpoint slightly tilted upward in the vertical direction from the front of the face (upper and/or lower teeth row) of the subject (e.g., viewed from the viewpoint tilted upward by 10 degrees in the vertical direction from the front) based on the three-dimensional data after the simulation.

Although not illustrated, data generation apparatus 10 generates a rendering image including the upper and/or lower teeth row in two dimensions viewed from the viewpoint slightly tilted downward in the vertical direction (e.g., viewed from the viewpoint tilted downward by 10 degrees in the vertical direction from the front) and a rendering image including the upper and/or lower teeth row in two dimensions viewed from the viewpoint slightly tilted upward in the vertical direction (e.g., viewed from the viewpoint tilted upward by 10 degrees in the vertical direction from the front) based on rendering image TL. Data generation apparatus 10 generates a rendering image including the upper and/or lower teeth row in two dimensions viewed from the viewpoint slightly tilted downward in the vertical direction (e.g., viewed from the viewpoint tilted downward by 10 degrees in the vertical direction from the front) and a rendering image including the upper and/or lower teeth row in two dimensions viewed from the viewpoint slightly tilted upward in the vertical direction (e.g., viewed from the viewpoint tilted upward by 10 degrees in the vertical direction from the front) based on rendering image TR.

In this manner, data generation apparatus 10 can generate a plurality of rendering images from the viewpoints tilted in stages in the horizontal direction and a plurality of rendering images from the viewpoints tilted in stages in the vertical direction. In data generation apparatus 10, the angle by which the viewpoint is tilted from the front of the face (upper and/or lower teeth row) of the subject in the horizontal direction or the vertical direction is previously set. Setting the angle finer enables data generation apparatus 10 to generate more rendering images based on the viewpoints in multiple directions.

In S7, data generation apparatus 10 roughly searches for the rendering image including the upper and/or lower teeth row image that matches in appearance the upper and/or lower teeth row image included in each of the frame images through pattern matching using the rendering images from the viewpoints tilted by a rough angle (e.g., at 3-degree intervals) in the horizontal direction or the vertical direction. Then, in S8, data generation apparatus 10 generates rendering images from the viewpoints tilted by a fine angle (e.g., at 1-degree intervals) in the horizontal direction or the vertical direction based on the rendering image generated (extracted) in S7 and searches in detail for the rendering image including the upper and/or lower teeth row image that matches in appearance the upper and/or lower teeth row image included in each of the frame images through pattern matching.

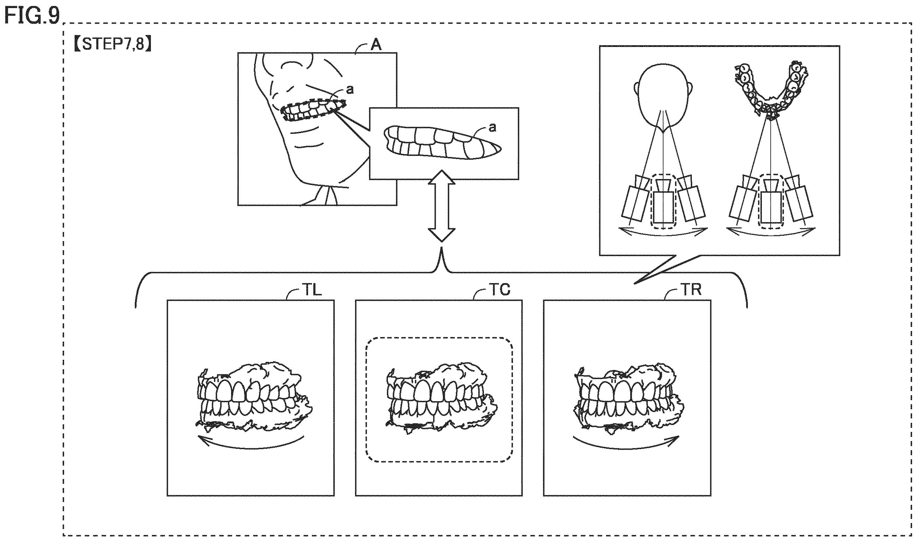

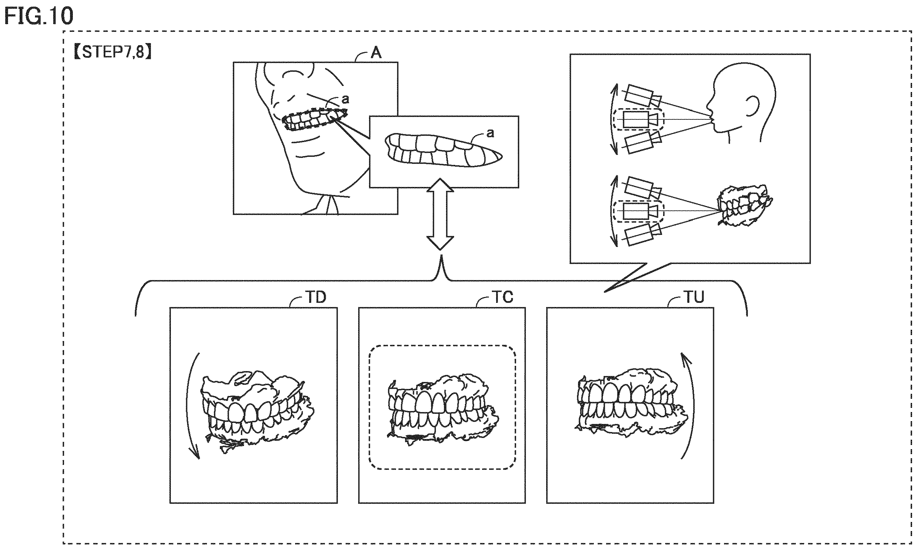

With reference to Figs. 9 and 10, an example of the pattern matching will be described. As illustrated in Fig. 9, data generation apparatus 10 performs pattern matching in the horizontal direction between the upper and/or lower teeth row image extracted in S5 based on each of the frame images constituting the moving image data and each rendering image including the upper and/or lower teeth row in two dimensions viewed from each viewpoint in the horizontal direction to extract the viewpoint of camera 20 in the horizontal direction of the upper and/or lower teeth row image extracted from each frame image.

For example, data generation apparatus 10 performs pattern matching in the horizontal direction between upper and/or lower teeth row image a extracted from frame image A showing the subject with the upper and lower teeth rows closed and rendering images TC, TL, and TR, each of which is generated based on the three-dimensional data after the simulation and includes the upper and/or lower teeth row in two dimensions viewed from each viewpoint in the horizontal direction, to extract the rendering image corresponding to upper and/or lower teeth row image a from rendering images TC, TL, and TR.

Specifically, data generation apparatus 10 performs pattern matching in the horizontal direction between the shape (appearance) of the upper and/or lower teeth row included in upper and/or lower teeth row image a and the shape (appearance) of the upper and/or lower teeth row included in each of rendering images TC, TL, and TR to extract the rendering image including the shape of the upper and/or lower teeth row that most closely resembles, in the horizontal direction, the shape of the upper and/or lower teeth row included in upper and/or lower teeth row image a from rendering images TC, TL, and TR. At this time, data generation apparatus 10 may perform the pattern matching in the horizontal direction based on tooth characteristics. For example, data generation apparatus 10 may perform the pattern matching in the horizontal direction for the shape near the incisal edge of the incisor or near the occlusal surface of the canine tooth or molar tooth. In the example of Fig. 9, data generation apparatus 10 extracts rendering image TC as the rendering image that matches upper and/or lower teeth row image a in the horizontal direction. This enables data generation apparatus 10 to extract the viewpoint of camera 20 in the horizontal direction of upper and/or lower teeth row image a. For other frame images B to D, data generation apparatus 10 can extract the viewpoint of camera 20 in the horizontal direction of the upper and/or lower teeth row image included in each of frame images B to D in the same method as for frame image A.

As illustrated in Fig. 10, data generation apparatus 10 performs pattern matching in the vertical direction between the upper and/or lower teeth row image extracted in S5 based on each of the frame images constituting the moving image data and each rendering image including the upper and/or lower teeth row in two dimensions viewed from each viewpoint in the vertical direction to extract the viewpoint of camera 20 in the vertical direction of the upper and/or lower teeth row image extracted from each frame image.

For example, data generation apparatus 10 performs pattern matching in the vertical direction between upper and/or lower teeth row image a extracted from frame image A showing the subject with the upper and lower teeth rows closed and rendering images TC, TD, and TU, each of which is generated based on the three-dimensional data after the simulation and includes the upper and/or lower teeth row in two dimensions viewed from each viewpoint in the vertical direction, to extract the rendering image corresponding to upper and/or lower teeth row image a from rendering images TC, TD, and TU.

Specifically, data generation apparatus 10 performs pattern matching in the vertical direction between the shape (appearance) of the upper and/or lower teeth row included in upper and/or lower teeth row image a and the shape (appearance) of the upper and/or lower teeth row included in each of rendering images TC, TD, and TU to extract the rendering image including the shape of the upper and/or lower teeth row that most closely resembles, in the vertical direction, the shape of the upper and/or lower teeth row included in upper and/or lower teeth row image a from rendering images TC, TD, and TU. At this time, data generation apparatus 10 may perform the pattern matching in the vertical direction based on tooth characteristics. For example, data generation apparatus 10 may perform the pattern matching in the vertical direction for the shape near the incisal edge of the incisor or near the occlusal surface of the canine tooth or molar tooth. In the example of Fig. 10, data generation apparatus 10 extracts rendering image TC as the rendering image that matches upper and/or lower teeth row image a in the vertical direction. This enables data generation apparatus 10 to extract the viewpoint of camera 20 in the vertical direction of upper and/or lower teeth row image a. For other frame images B to D, data generation apparatus 10 can extract the viewpoint of camera 20 in the vertical direction of the upper and/or lower teeth row image included in each of frame images B to D in the same method as for frame image A.

Data generation apparatus 10 may generate the rendering images based on the viewpoints in the multiple directions not while performing pattern matching, but before performing pattern matching.

When data generation apparatus 10 performs the pattern matching between the upper and/or lower teeth row image extracted from each frame image and the rendering images in S7 and S8, data generation apparatus 10 may use the position of each of the object to be photographed (e.g., the face of the subject) and camera 20 obtained in S3. For example, data generation apparatus 10 may enlarge or reduce the upper and/or lower teeth row images included in the rendering images in accordance with the size of the upper and/or lower teeth row image based on the position of each of the object to be photographed (e.g., the face of the subject) and camera 20. This enables data generation apparatus 10 to improve the accuracy of the pattern matching through image recognition, and also reduce the processing load of the pattern matching and shorten the processing time for the pattern matching.

Also, since data generation apparatus 10 previously corrects distortion in the frame images in S2, it is possible to sharpen the upper and/or lower teeth row image that is extracted from each of the frame images and to be pattern-matched. This enables data generation apparatus 10 to improve the accuracy of the pattern matching through image recognition.

Referring back to Fig. 3, based on the viewpoints of camera 20 in the horizontal direction and the vertical direction of the upper and/or lower teeth row image included in each frame image extracted through the pattern matching in S7 and S8, data generation apparatus 10 generates each rendering image corresponding to the upper and/or lower teeth row image included in each frame image (S9).

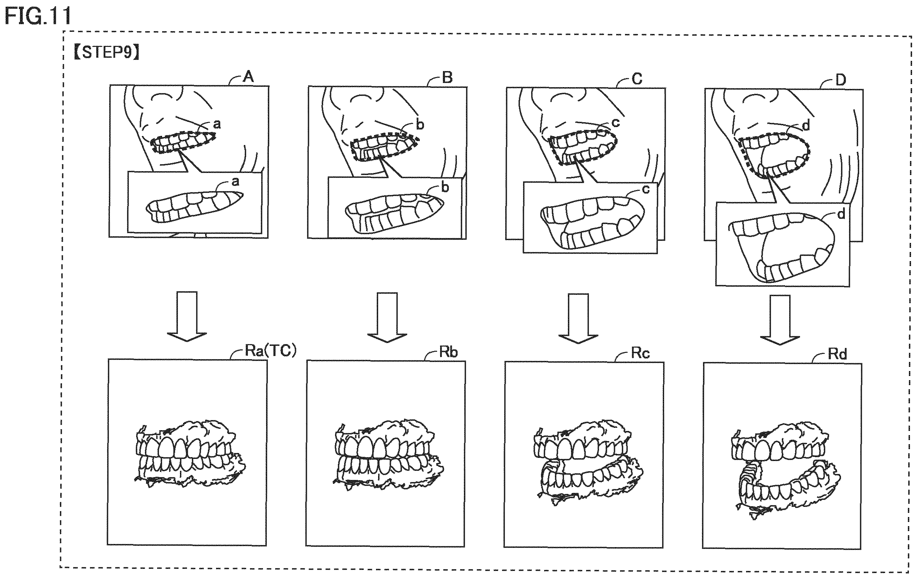

For example, Fig. 11 is a diagram for describing processing details of STEP 9 in the data generation process. As illustrated in Fig. 11, based on the viewpoints in the horizontal direction and the vertical direction in frame images A to D extracted in S7 and S8, data generation apparatus 10 generates rendering images Ra to Rd viewed from the respective viewpoints.

Specifically, data generation apparatus 10 generates rendering image Ra in which the upper and lower teeth rows are closed corresponding to upper and/or lower teeth row image a included in frame image A. Data generation apparatus 10 generates rendering image Rb in which the upper and lower teeth rows in a closed state shown by rendering image Ra are changed to a slightly open state corresponding to upper and/or lower teeth row image b included in frame image B. Data generation apparatus 10 generates rendering image Rc in which the upper and lower teeth rows in a closed state shown by rendering image Ra are changed to a more open state than in rendering image Rb corresponding to upper and/or lower teeth row image c included in frame image C. Data generation apparatus 10 generates rendering image Rd in which the upper and lower teeth rows in a closed state shown by rendering image Ra are changed to a more open state than in rendering image Rc corresponding to upper and/or lower teeth row image d included in frame image D.

Referring back to Fig. 3, data generation apparatus 10 cuts out a part corresponding to the upper and/or lower teeth row image extracted from each of the frame images in S5 from each of generated rendering images Ra, Rb, Rc, and Rd (S10).

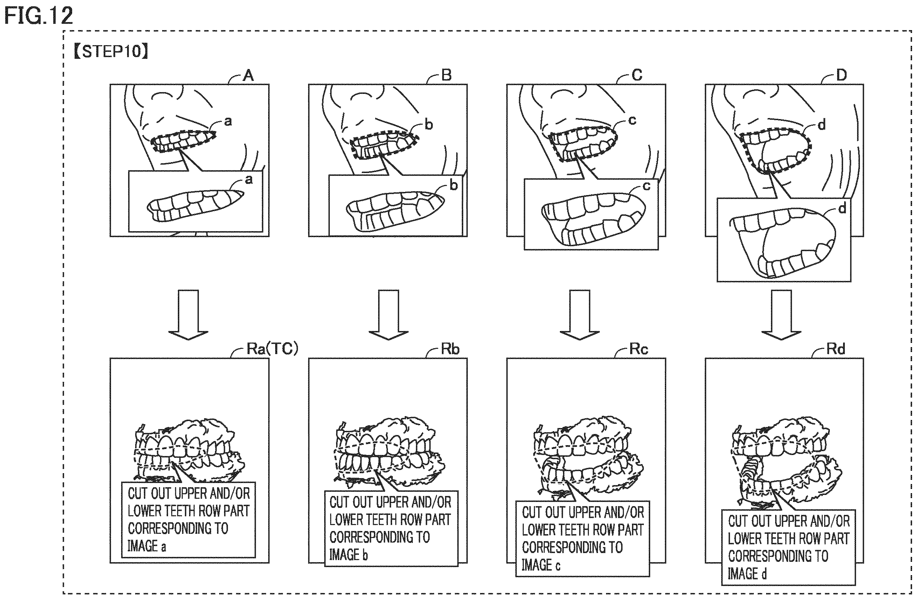

For example, Fig. 12 is a diagram for describing processing details of STEP 10 in the data generation process. As illustrated in Fig. 12, data generation apparatus 10 cuts out a part corresponding to the upper and/or lower teeth row image extracted from frame image A from rendering image Ra. Data generation apparatus 10 cuts out a part corresponding to the upper and/or lower teeth row image extracted from frame image B from rendering image Rb. Data generation apparatus 10 cuts out a part corresponding to the upper and/or lower teeth row image extracted from frame image C from rendering image Rc. Data generation apparatus 10 cuts out a part corresponding to the upper and/or lower teeth row image extracted from frame image D from rendering image Rd.

Referring back to Fig. 3, data generation apparatus 10 converts a part of each frame image in which the upper and/or lower teeth row image is shown to the part corresponding to the upper and/or lower teeth row image cut out from the rendering image in S10 to generate simulation moving image data showing the face of the subject reflecting the simulation result and stores the simulation moving image data in storage device 12 (S11).

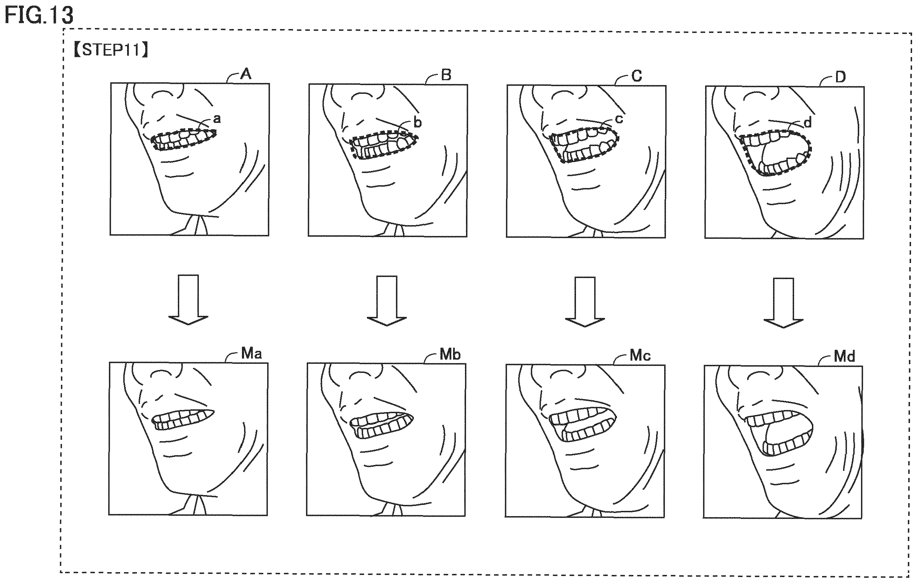

For example, Fig 13 is a diagram for describing processing details of STEP 11 in the data generation process. As illustrated in Fig. 13, data generation apparatus 10 converts a part of frame image A in which upper and/or lower teeth row image a is shown to the part corresponding to the upper and/or lower teeth row image cut out from rendering image Ra to generate a frame image Ma reflecting the simulation result. At this time, data generation apparatus 10 performs a process to smoothly connect a joint between the converted part corresponding to the upper and/or lower teeth row and an unconverted part other than the upper and/or lower teeth row in frame image Ma reflecting the simulation result. The "converting" includes overlaying the part of the frame image in which the upper and/or lower teeth row image is shown on the part corresponding to the upper and/or lower teeth row image cut out from the rendering image or replacing the part of the frame image in which the upper and/or lower teeth row image is shown with the part corresponding to the upper and/or lower teeth row image cut out from the rendering image.

Similarly, data generation apparatus 10 converts a part of frame image B in which upper and/or lower teeth row image b is shown to the part corresponding to the upper and/or lower teeth row image cut out from rendering image Rb to generate a frame image Mb reflecting the simulation result. Data generation apparatus 10 converts a part of frame image C in which upper and/or lower teeth row image c is shown to the part corresponding to the upper and/or lower teeth row image cut out from rendering image Rc to generate a frame image Mc reflecting the simulation result. Data generation apparatus 10 converts a part of frame image D in which upper and/or lower teeth row image d is shown to the part corresponding to the upper and/or lower teeth row image cut out from rendering image Rd to generate a frame image Md reflecting the simulation result. Data generation apparatus 10 can generate simulation moving image data of the subject smiling, the data reflecting the simulation result, by linking these frame images Ma, Mb, Mc, and Md in chronological order.

Referring back to Fig. 3, data generation apparatus 10 generates a smile simulation result based on the simulation moving image data stored in storage device 12 and outputs the generated simulation result (S12). For example, data generation apparatus 10 generates a simulation moving image that switches frame images Ma, Mb, Mc, and Md after the simulation as illustrated in Fig. 13 in chronological order based on the simulation moving image data, and displays the generated simulation moving image on display 40 or transmits data of the simulation moving image to the external device from communication device 18.

As described above, data generation apparatus 10 according to the first embodiment can generate the simulation moving image data showing the face of the subject reflecting the simulation result of dental treatment using the moving image data obtained by photographing the subject with the partial teeth row of the upper and/or lower teeth row exposed and the three-dimensional data of the upper and/or lower teeth row of the subject. This enables the user to convert a moving image of the subject obtained by photographing the subject before dental treatment using camera 20 and three-dimensional scanner 30 to a moving image based on the assumption that the dental treatment has been performed. Thus, it is possible to easily and accurately perform the simulation of the face of the subject after the dental treatment.

Data generation apparatus 10 first roughly searches for the rendering image including the upper and/or lower teeth row image that matches in appearance the upper and/or lower teeth row image included in each frame image through pattern matching using the rendering images from the viewpoints tilted by a rough angle in the horizontal direction or the vertical direction, and then generates the rendering images from the viewpoints tilted by a fine angle in the horizontal direction or the vertical direction based on the rendering image generated (extracted) through the rough pattern matching and searches in detail for the rendering image including the upper and/or lower teeth row image that matches in appearance the upper and/or lower teeth row image included in each frame image through pattern matching. For example, it is assumed that the pattern matching is achieved when data generation apparatus 10 tries pattern matching with the upper and/or lower teeth row image of the frame image using the rendering images from the viewpoints changed by a rough angle (e.g., at 3-degree intervals) in each of the horizontal direction and the vertical direction, tries, based on the rendering image with a certain high level of matching (a first predetermined value or more) in the tried pattern matching, pattern matching with the upper and/or lower teeth row image of the frame image using the rendering images from the viewpoints changed by a fine angle (e.g., at 1-degree intervals) in each of the horizontal direction and the vertical direction, and obtains the rendering image with an extremely high level of matching (a second predetermined value, which is higher than the first predetermined value, or more) in the tried pattern matching. This enables data generation apparatus 10 to reduce the processing load of the pattern matching and shorten the processing time for the pattern matching compared to the case where the detailed pattern matching is performed from the beginning.

The moving image data obtained by camera 20 may be input to data generation apparatus 10 in real time during photographing of the subject. In this case, following the input of the moving image data via moving image data interface 13 during photographing of the subject, data generation apparatus 10 may execute the data generation process in Fig. 3 to generate the simulation moving image data in real time during photographing. Accordingly, the simulation moving image data is generated at the same time as or immediately after camera 20 photographs the subject. Thus, the user can immediately show the simulation result to the subject, which improves the convenience of the user.

Data generation apparatus 10 according to the first embodiment described above is configured to first perform the simulation of dental treatment on the three-dimensional data obtained by three-dimensional scanner 30 in S6 and then perform pattern matching between the upper and/or lower teeth row image extracted from one frame image selected from the plurality of frame images constituting the moving image data and the rendering images reflecting the simulation in S7 and S8. However, data generation apparatus 10 may be configured as described below.

For example, without executing the process of S6, data generation apparatus 10 may generate a plurality of rendering images based on the three-dimensional data that is obtained by three-dimensional scanner 30 and does not reflect the simulation, and perform pattern matching between the upper and/or lower teeth row image extracted from one frame image selected from the plurality of frame images constituting the moving image data and the rendering images before the simulation in S7 and S8. Then, data generation apparatus 10 may perform the simulation of dental treatment on the upper and/or lower teeth row for each of the rendering images corresponding one-to-one to the frame images extracted in S7 and S8. This also enables data generation apparatus 10 to generate the simulation moving image data of the subject smiling, the data reflecting the simulation result.

A color temperature of a light source used when camera 20 captures the moving image may be input to data generation apparatus 10. When generating the rendering image in S9, data generation apparatus 10 may adjust the color of the upper and/or lower teeth row image after the simulation included in the rendering image based on the obtained color temperature of the light source so as to bring the color of the upper and/or lower teeth row image closer to the color of the upper and/or lower teeth row of the subject at the time of photographing. This enables data generation apparatus 10 to generate moving image data using the upper and/or lower teeth row image after the simulation, the image having a color close to the color of the upper and/or lower teeth row of the subject. Furthermore, a parameter relating to the light source, such as the position or intensity, or refraction or reflection of light of the light source used when camera 20 captures the moving image, may be input to data generation apparatus 10, and data generation apparatus 10 may generate the rendering image based on the parameter. Data generation apparatus 10 may use artificial intelligence (AI) that is machine-learned to generate an optimal rendering image in accordance with conditions of light or shadows detectable in each frame image included in the moving image data and the color of the upper and/or lower teeth row. This makes it possible to shorten the processing time for adjustment of light, shadows, or color in the rendering image.

### <Second Embodiment>

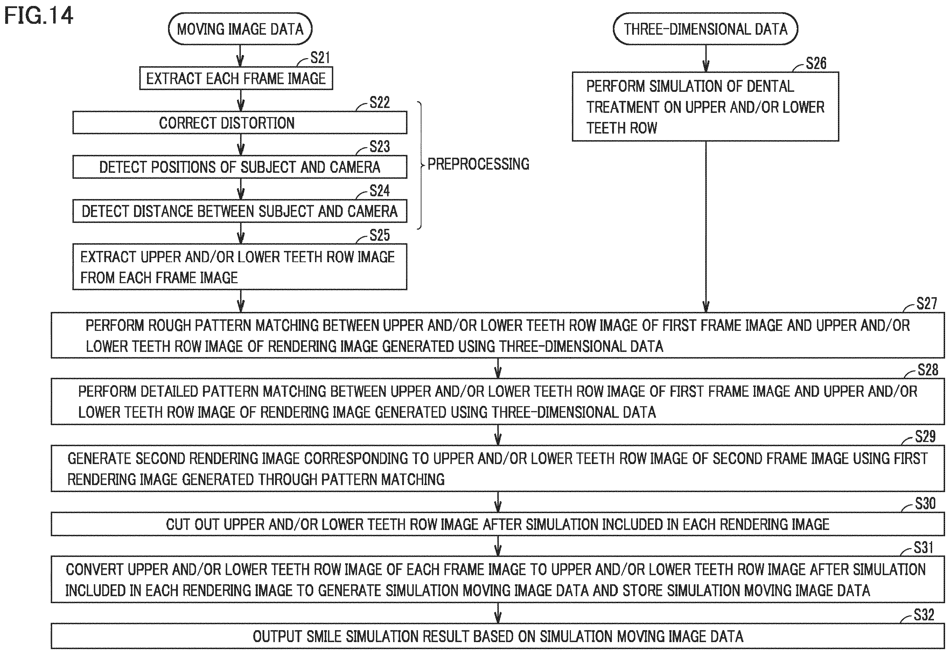

Data generation apparatus 10 according to a second embodiment of the present disclosure will be described in detail with reference to Fig. 14. In data generation apparatus 10 according to the second embodiment, only differences from data generation apparatus 10 according to the first embodiment will be described, and the same parts as those in data generation apparatus 10 according to the first embodiment will be designated by the same reference signs as those in the first embodiment to omit repetitive description.

Fig. 14 is a flowchart for describing an example of a data generation process executed by data generation apparatus 10 according to the second embodiment. In an example described as the data generation process according to the second embodiment illustrated in Fig. 14, a simulation image is first generated through pattern matching using only a first frame image included in moving image data, and a simulation image corresponding to at least one other second frame image included in the moving image data is then generated using the simulation image corresponding to the first frame image. In the second embodiment, the position (viewpoint) of camera 20 and the position of the object to be photographed are fixed while a moving image of the subject is being captured. That is, frame images A to D obtained by camera 20 have the same position (viewpoint) of camera 20 and the same position of the upper and/or lower teeth row, which is the object to be photographed.

As illustrated in Fig. 14, as with the processes of S1 to S5 illustrated in Fig. 3, data generation apparatus 10 extracts a plurality of frame images (e.g., frame images A, B, C, and D of Fig. 4) constituting moving image data (S21), executes preprocessing (S22 to S24), and extracts an upper and/or lower teeth row image corresponding to the upper and/or lower teeth row from each of the frame images (S25).

As with the process of S6 illustrated in Fig. 3, data processing apparatus 10 performs a simulation of dental treatment on the upper and/or lower teeth row (S26). Then, while generating a plurality of rendering images including the upper and/or lower teeth row in two dimensions viewed from multiple directions based on three-dimensional data after the simulation of the upper and/or lower teeth row with dental treatment performed thereon, data generation apparatus 10 performs rough pattern matching between the upper and/or lower teeth row image included in the first frame image extracted in S25 and an upper and/or lower teeth row image included in each of the rendering images (S27) and further performs detailed pattern matching between the upper and/or lower teeth row image included in the first frame image extracted in S25 and the upper and/or lower teeth row image included in each of the rendering images (S28).

For example, in S27, data generation apparatus 10 roughly searches for the rendering image including the upper and/or lower teeth row image that matches in appearance the upper and/or lower teeth row image included in frame image A (first frame image) through pattern matching. Then, in S28, data generation apparatus 10 generates rendering images from the viewpoints tilted by a fine angle in the horizontal direction or the vertical direction based on the rendering image generated (extracted) in S27 and searches in detail for the rendering image including the upper and/or lower teeth row image that matches in appearance the upper and/or lower teeth row image included in frame image A (first frame image) through pattern matching.

Based on the viewpoints of camera 20 in the horizontal direction and the vertical direction of the upper and/or lower teeth row image included in the first frame image extracted through the pattern matching in S27 and S28, data generation apparatus 10 generates a first rendering image corresponding to the upper and/or lower teeth row image included in the first frame image and generates a second rendering image corresponding to the upper and/or lower teeth row image included in another second frame image using the generated first rendering image (S29).

For example, in S29, data generation apparatus 10 generates rendering image Ra (first rendering image) corresponding to the upper and/or lower teeth row image included in frame image A (first frame image) and generates rendering images Rb to Rd (second rendering images) corresponding to the upper and/or lower teeth row images included in respective frame images B to D (second frame images) using generated rendering image Ra (first rendering image).

Data generation apparatus 10 cuts out a part corresponding to the upper and/or lower teeth row image extracted from each of the frame images in S25 from each of generated rendering images Ra, Rb, Rc, and Rd (S30).

Data generation apparatus 10 converts a part of each frame image in which the upper and/or lower teeth row image is shown to the part corresponding to the upper and/or lower teeth row image cut out from the rendering image in S30 and performs the process to smoothly connect the joint between the converted part corresponding to the upper and/or lower teeth row and an unconverted part other than the upper and/or lower teeth row to generate simulation moving image data showing the face of the subject reflecting the simulation result and stores the simulation moving image data in storage device 12 (S31).

Data generation apparatus 10 generates a smile simulation result based on the simulation moving image data stored in storage device 12 and outputs the generated simulation result (S32).

As described above, data generation apparatus 10 according to the second embodiment first generates the simulation image corresponding to the first frame image included in the moving image data through pattern matching using only the first frame image and then generates the simulation image corresponding to the second frame image included in the moving image data using the simulation image corresponding to the first frame image. Thus, only one frame image is subjected to the pattern matching. This enables data generation apparatus 10 to reduce the processing load of the pattern matching and shorten the processing time for the pattern matching compared to the case where the pattern matching is performed on each of the frame images constituting the moving image data.

### <Third Embodiment>

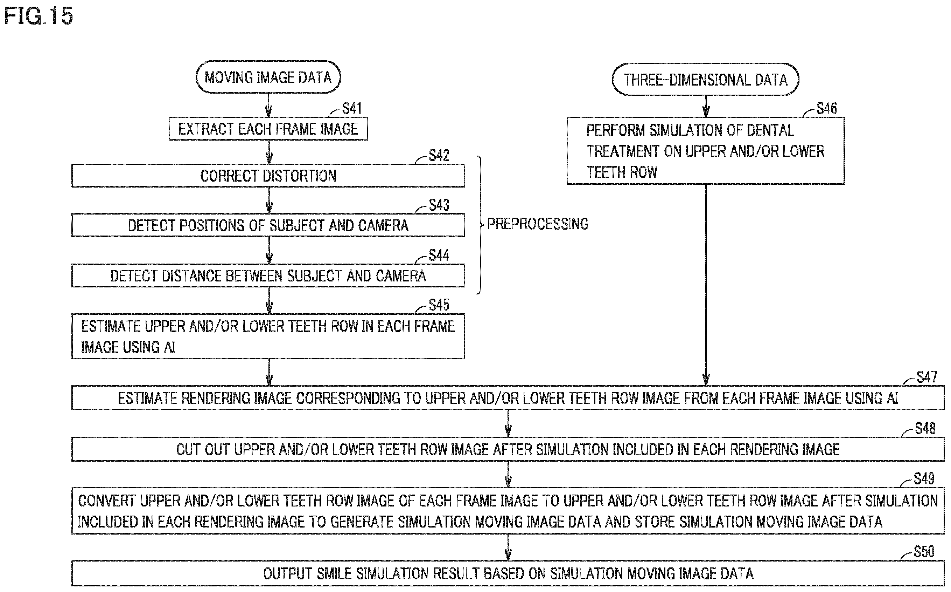

Data generation apparatus 10 according to a third embodiment of the present disclosure will be described in detail with reference to Figs. 15 to 18. In data generation apparatus 10 according to the third embodiment, only differences from data generation apparatus 10 according to the first embodiment will be described, and the same parts as those in data generation apparatus 10 according to the first embodiment will be designated by the same reference signs as those in the first embodiment to omit repetitive description.

Fig. 15 is a flowchart for describing an example of a data generation process executed by data generation apparatus 10 according to the third embodiment. In an example described as the data generation process according to the third embodiment illustrated in Fig. 15, an area (shape) of the upper and/or lower teeth row in each of frame images constituting moving image data is estimated using AI, and each rendering image corresponding to the upper and/or lower teeth row included in each of the frame images is further estimated using AI.

As illustrated in Fig. 15, as with the processes of S1 to S4 illustrated in Fig. 3, data generation apparatus 10 extracts a plurality of frame images (e.g., frame images A, B, C, and D of Fig. 4) constituting moving image data (S41) and executes preprocessing (S42 to S44).

Data generation apparatus 10 estimates the upper and/or lower teeth row in each of the frame images constituting the moving image data using AI (S45). Specifically, based on input data including each frame image, data generation apparatus 10 estimates an area (shape) of the upper and/or lower teeth row in each frame image using an estimation model 130 for estimating the area (shape) of the upper and/or lower teeth row in each frame image based on the input data.

Estimation model 130 includes a known neural network used in deep learning-based image recognition processing, such as convolution neural network (CNN), generative adversarial network (GAN), recurrent neural network (RNN), or long short term memory network (LSTM network), and a parameter relating to the neural network.

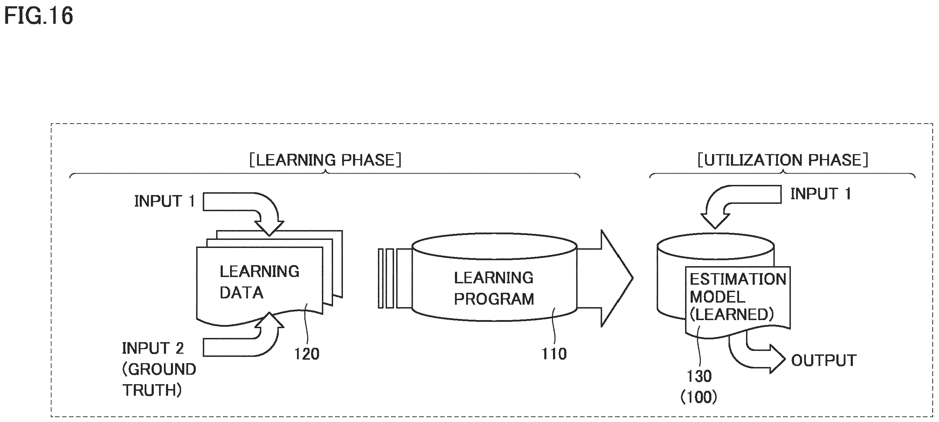

With reference to Fig. 16, supervised learning for estimation model 130 will be described. Fig. 16 is a diagram for describing an outline of the supervised learning executed by data generation apparatus 10 according to the third embodiment. As illustrated in Fig. 16, in a learning phase, data generation apparatus 10 executes a learning program 110 to machine-learn estimation model 130 based on learning data 120 including an input 1 and an input 2 (ground truth). In a utilization phase, data generation apparatus 10 estimates an output based on input 1 using learned estimation model 130.

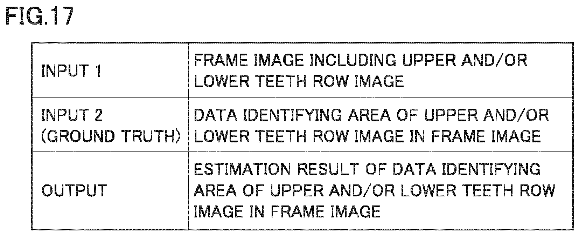

Fig. 17 is a diagram for describing the input and the output of the supervised learning in data generation apparatus 10 according to the third embodiment. As illustrated in Fig. 17, the frame image including the upper and/or lower teeth row image is used as input 1 which is problem data of the machine learning. Data that identifies the area of the upper and/or lower teeth row in the frame image of input 1 is used as input 2 which is ground truth data of the machine learning. Data for distinguishing between an area of the upper and/or lower teeth row and an area of a part other than the upper and/or lower teeth row in the frame image is an example of the data that identifies the area of the upper and/or lower teeth row in the frame image. For example, the frame image added with data of "1" for the area of the upper and/or lower teeth row and "0" for the area of the part other than the upper and/or lower teeth row is used as input 2. Furthermore, a distinction may be made in data that identifies the areas between the upper teeth row and the lower teeth row. For example, the frame image added with data of "1" for the area of the upper teeth row, "2" for the area of the lower teeth row, and "0" for the area of the part other than the upper and lower teeth rows may be used as input 2. An estimation result of the data that identifies the area of the upper and/or lower teeth row in the frame image of input 1 is used as the output that data generation apparatus 10 estimates based on input 1.

That is, in the learning phase, based on the frame image including the upper and/or lower teeth row image (input 1), data generation apparatus 10 estimates data that identifies the area of the upper and/or lower teeth row in the frame image (output) and compares the estimated data that identifies the area of the upper and/or lower teeth row (output) with the data that identifies the area of the upper and/or lower teeth row in the frame image as the ground truth (input 2). Data generation apparatus 10 does not update the parameter included in estimation model 130 when these data match and updates the parameter included in estimation model 130 so that these data match when these data do not match, thereby optimizing estimation model 130. Learned estimation model 130 machine-learned in this manner is stored in storage device 12 as data generation program 100. In the utilization phase, based on the frame image including the upper and/or lower teeth row image (input 1), data generation apparatus 10 estimates the upper and/or lower teeth row image included in the frame image (output), that is, the shape of the upper and/or lower teeth row shown by the frame image using learned estimation model 130.

Referring back to Fig. 14, as with the process of S6 illustrated in Fig. 3, data generation apparatus 10 performs a simulation of dental treatment on the upper and/or lower teeth row (S46), and then estimates each of rendering images (e.g., rendering images Ra, Rb, Rc, and Rd of Fig. 11) corresponding to each of the upper and/or lower teeth row images (e.g., upper and/or lower teeth row images a, b, c, and d of Fig. 5) estimated in S45 based on each of frame image A, B, C, and D constituting the moving image data using AI (S47). Specifically, based on input data including the upper and/or lower teeth row image included in each of the frame images estimated in S45 and a plurality of rendering images including the upper and/or lower teeth row image, data generation apparatus 10 estimates the rendering image corresponding to the upper and/or lower teeth row image included in each of the frame images using estimation model 130 for estimating the rendering image corresponding to the upper and/or lower teeth row image based on the input data.

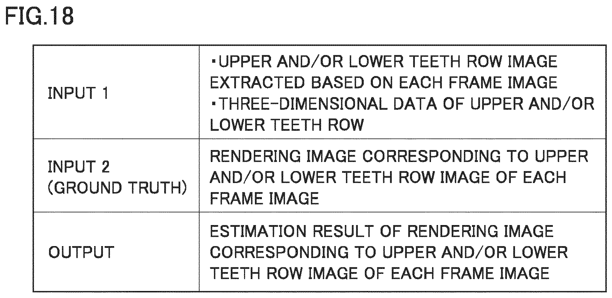

Fig. 18 is a diagram for describing the input and the output of the supervised learning in data generation apparatus 10 according to the third embodiment. As illustrated in Fig. 18, the upper and/or lower teeth row image extracted based on each frame image and three-dimensional data of the upper and/or lower teeth row are used as input 1, which is the problem data of the machine learning. The rendering image corresponding to the upper and/or lower teeth row image included in each frame image of input 1 is used as input 2, which is the ground truth data of the machine learning. An estimation result of the rendering image corresponding to the upper and/or lower teeth row image included in each frame image of input 1 is used as the output that data generation apparatus 10 estimates based on input 1.

That is, in the learning phase, based on the upper and/or lower teeth row image extracted based on each frame image and the three-dimensional data of the upper and/or lower teeth row (input 1), data generation apparatus 10 estimates the rendering image corresponding to the upper and/or lower teeth row image included in each frame image (output) and compares each estimated rendering image (output) with the rendering image corresponding to the upper and/or lower teeth row image included in each frame image as the ground truth (input 2). Data generation apparatus 10 does not update the parameter included in estimation model 130 when these images match and updates the parameter included in estimation model 130 so that these images match when these images do not match, thereby optimizing estimation model 130. Learned estimation model 130 machine-learned in this manner is stored in storage device 12 as data generation program 100. In the utilization phase, based on the upper and/or lower teeth row image extracted based on each frame image and the three-dimensional data of the upper and/or lower teeth row (input 1), data generation apparatus 10 estimates the rendering image corresponding to the upper and/or lower teeth row image included in each frame image (output) using learned estimation model 130.

Referring back to Fig. 15, data generation apparatus 10 cuts out a part corresponding to the upper and/or lower teeth row image extracted from each of the frame images in S47 from each of generated rendering images Ra, Rb, Rc, and Rd (S48).

Data generation apparatus 10 converts a part of each frame image in which the upper and/or lower teeth row image is shown to the part corresponding to the upper and/or lower teeth row image cut out from the rendering image in S48 and performs the process to smoothly connect the joint between the converted part corresponding to the upper and/or lower teeth row and an unconverted part other than the upper and/or lower teeth row to generate simulation moving image data showing the face of the subject reflecting the simulation result and stores the simulation moving image data in storage device 12 (S49).

Data generation apparatus 10 generates a smile simulation result based on the simulation moving image data stored in storage device 12 and outputs the generated simulation result (S50).

As described above, since data generation apparatus 10 according to the third embodiment estimates the shape of the upper and/or lower teeth row from each of the frame images constituting the moving image data using AI, it is possible to more accurately extract the upper and/or lower teeth row image from each of the frame images constituting the moving image data. Furthermore, since data generation apparatus 10 estimates each rendering image corresponding to the upper and/or lower teeth row included in each frame image using AI, it is possible to more accurately extract each rendering image corresponding to the upper and/or lower teeth row included in each frame image. This enables data generation apparatus 10 to accurately generate the simulation moving image data of the subject smiling, the data reflecting the simulation result.

### <Fourth Embodiment>

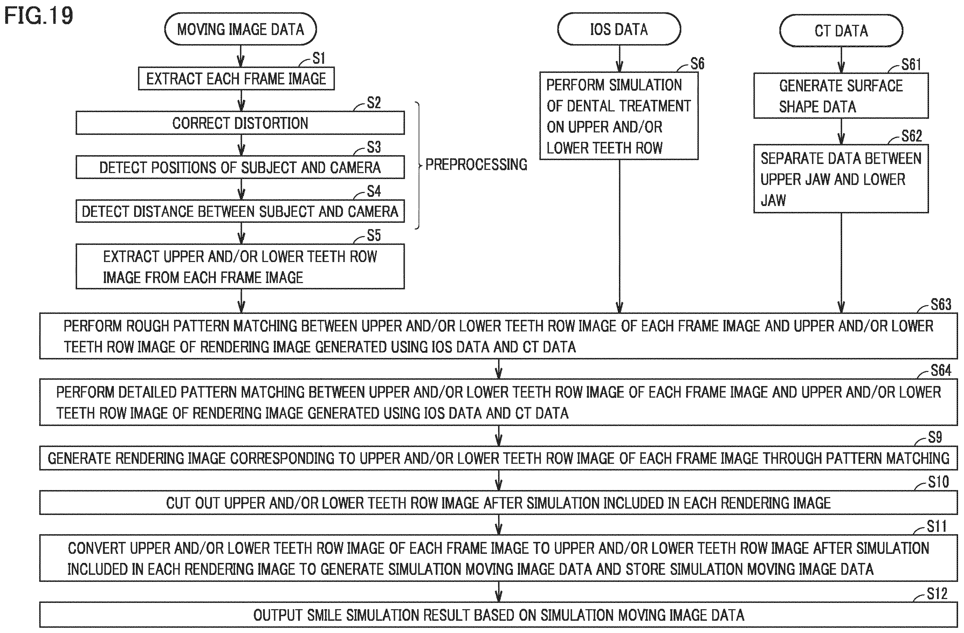

Data generation apparatus 10 according to a fourth embodiment of the present disclosure will be described in detail with reference to Fig. 19. In data generation apparatus 10 according to the fourth embodiment, only differences from data generation apparatus 10 according to the first embodiment will be described, and the same parts as those in data generation apparatus 10 according to the first embodiment will be designated by the same reference signs as those in the first embodiment to omit repetitive description.

Fig. 19 is a flowchart for describing an example of a data generation process executed by data generation apparatus 10 according to the fourth embodiment. In the fourth embodiment illustrated in Fig. 19, data generation system 1 includes a computed tomography (CT) imaging device (not illustrated). The CT imaging device is an X-ray imaging device that rotates a transmitter and a receiver of X-rays, which are a type of radiation, around the face of the subject to take a computed tomographic image of the upper and lower jaws of the subject. A user can obtain three-dimensional volume (voxel) data of a hard tissue part (e.g., bone and teeth) other than a soft tissue part (e.g., skin and gums) around the upper and lower jaws of the subject by photographing the upper and lower jaws of the subject using the CT imaging device. The user can generate a tomographic image or an appearance image of the object to be photographed by tomographic-processing the volume data of the object to be photographed obtained using the CT imaging device. Hereinbelow, three-dimensional surface coordinate data obtained by three-dimensional scanner 30 may also be referred to as "IOS data", and the three-dimensional volume data obtained by the CT imaging device may also be referred to as "CT data". The IOS data and the CT data both correspond to the three dimensional data of the upper and/or lower teeth row. Thus, the IOS data and the CT data may be collectively referred to as "three-dimensional data".

In the data generation process according to the fourth embodiment, in addition to the IOS data of the upper and/or lower teeth row of the subject obtained by three-dimensional scanner 30, the CT data of the upper and lower jaws including the upper and/or lower teeth row of the subject obtained by the CT imaging device is input.

As illustrated in Fig. 19, data generation apparatus 10 generates surface shape data showing the shape of the surface of the hard tissue part (e.g., bone and teeth) in the upper and lower jaws of the subject based on the CT data input from the CT imaging device (S61). Data generation apparatus 10 separates the surface shape data generated in S61 between the upper jaw and the lower jaw (S62).

Data generation apparatus 10 generates a plurality of rendering images including the upper and/or lower teeth row in two dimensions viewed from multiple directions based on the IOS data of the upper and/or lower teeth row of the subject obtained by three-dimensional scanner 30 and the surface shape data of the upper and lower jaws generated in S62. The IOS data includes positional information of each of the grouped points showing the surface of the upper and/or lower teeth row and thus can precisely represent the position of each tooth and occlusion between the upper teeth row and the lower teeth row. On the other hand, the surface shape data of the upper and lower jaws generated based on the CT data can precisely represent the surface shape of the upper and/or lower teeth row and the root of each tooth. Thus data generation apparatus 10 can generate the rendering image that more precisely represents the shape, position, and the like of the upper and/or lower teeth row in two dimensions by combining the IOS data of the upper and/or lower teeth row and the surface shape data of the upper and lower jaws.

While generating the rendering images including the upper and/or lower teeth row in two dimensions viewed from the multiple directions based on the rendering image using the IOS data and the CT data as described above, data generation apparatus 10 performs rough pattern matching between the upper and/or lower teeth row image included in each of the frame images extracted in S5 and an upper and/or lower teeth row image included in each of the rendering images (S63) and further performs detailed pattern matching between the upper and/or lower teeth row image included in each of the frame images extracted in S5 and the upper and/or lower teeth row image included in each of the rendering images (S64).

Then, data generation apparatus 10 executes processes of S9 to S12 in the same manner as the data generation process according to the first embodiment illustrated in Fig. 3. Accordingly, data generation apparatus 10 can generate simulation moving image data showing the face of the subject reflecting the simulation result of dental treatment.

As described above, data generation apparatus 10 according to the fourth embodiment can generate the rendering image that more precisely represents the shape, position, and the like of the upper and/or lower teeth row in two dimensions using not only the IOS data obtained by three-dimensional scanner 30, but also the CT data obtained by the CT imaging device and accurately generate the simulation moving image data of the subject smiling, the data reflecting the simulation result, based on the moving image data of the subject obtained by camera 20 and the rendering image.

In both of data generation apparatuses 10 according to the second and third embodiments, the IOS data obtained by three-dimensional scanner 30 and the CT data obtained by the CT imaging device may be employed as the three-dimensional data input to data generation apparatus 10. In this case, in both of data generation apparatuses 10 according to the second and third embodiments, pattern matching may be executed by executing the processes of S61 to S64 of the data generation process according to the fourth embodiment illustrated in Fig. 19. Also, the three-dimensional data input to data generation apparatus 10 may include not only the IOS data obtained by directly scanning the upper and/or lower teeth row of the subject using the optical method of three-dimensional scanner 30 and the CT data obtained by taking a computed tomographic image of the upper and lower jaws of the subject using the CT imaging device as described above, but also surface shape data obtained by scanning a teeth and jaw model produced through impression taking of the upper and/or lower teeth row of the subject using a desktop scanner.

Data generation apparatus 10 is configured to separate the surface shape data between the upper jaw and the lower jaw and generate the rendering image corresponding to the upper jaw and the rendering image corresponding to the lower jaw based on each of the separated surface shape data of the upper jaw and the surface shape data of the lower jaw. However, data generation apparatus 10 may generate the rendering image of the upper and/or lower jaw combining the upper jaw and the lower jaw based on surface shape data of the upper and/or lower jaw. Then, data generation apparatus 10 may perform pattern matching with the upper and/or lower teeth row image using the generated rendering image of the upper and/or lower jaw. Furthermore, in moving image data of a biting action, an image of an occluded state is also captured. Thus, data generation apparatus 10 may additionally use IOS data of the occluded state when generating the rendering image of the upper and/or lower jaw.

### <Fifth Embodiment>

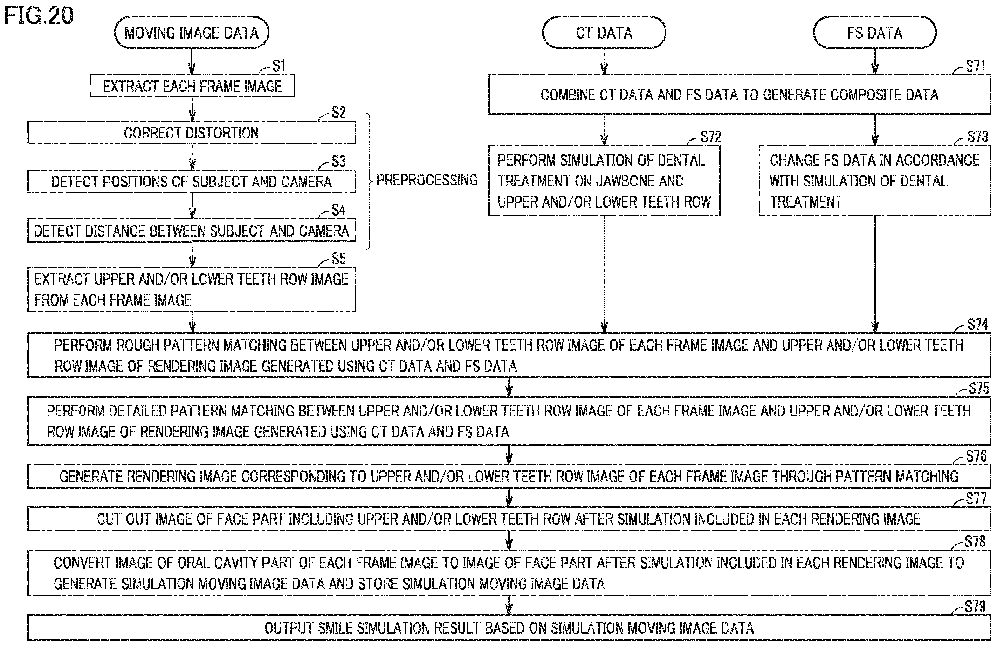

Data generation apparatus 10 according to a fifth embodiment of the present disclosure will be described in detail with reference to Fig. 20. In data generation apparatus 10 according to the fifth embodiment, only differences from data generation apparatus 10 according to the first embodiment will be described, and the same parts as those in data generation apparatus 10 according to the first embodiment will be designated by the same reference signs as those in the first embodiment to omit repetitive description.

Fig. 20 is a flowchart for describing an example of a data generation process executed by data generation apparatus 10 according to the fifth embodiment. In the fifth embodiment illustrated in Fig. 20, data generation system 1 includes a computed tomography (CT) imaging device (not illustrated) as with data generation apparatus 10 according to the fourth embodiment. Furthermore, in the fifth embodiment, data generation system 1 includes a facial data measurement device (not illustrated). A user can obtain three-dimensional data showing the shape of the surface of the face of the subject using the facial data measurement device. Hereinbelow, the three-dimensional volume data obtained by the CT imaging device may also be referred to as "CT data", and the three-dimensional data showing the shape of the surface of the face of the subject obtained by the facial data measurement device may also be referred to as "FS data". The CT data and the FS data may be collectively referred to as "three-dimensional data".

In the data generation process according to the fifth embodiment, in addition to the CT data of the upper and lower jaws including the upper and/or lower teeth row of the subject, the CT data being obtained by the CT imaging device, the FS data that is obtained by the facial data measurement device and shows the shape of the surface of the face of the subject is input.

As illustrated in Fig. 20, data generation apparatus 10 combines the CT data input from the CT imaging device and the FS data input from the facial data measurement device to generate composite data (S71). The composite data generated by data generation apparatus 10 can represent the shape of the surface of the hard tissue part (e.g., bone and teeth) in the upper and lower jaws of the subject that can be identified by the CT data and the shape of the surface of the soft tissue part (e.g., skin) of the face including the upper and lower jaws of the subject that can be identified by the FS data.

Data generation apparatus 10 performs a simulation of dental treatment on the jawbone and the upper and/or lower teeth row based on the CT data of the composite data (S72). Data generation apparatus 10 changes the FS data of the composite data in accordance with the dental treatment performed on the jawbone and the upper and/or lower teeth row using the CT data (S73). That is, data generation apparatus 10 performs the simulation of dental treatment on the jawbone and the upper and/or lower teeth row by changing the CT data and deforms the soft tissue part (e.g., skin and gums) by changing the FS data in response to a change in the shape of the surface of the hard tissue part (e.g., bone and teeth) in the upper and lower jaws caused by the change of the CT data.

Data generation apparatus 10 generates a plurality of rendering images of an oral cavity part including the upper and/or lower teeth row in two dimensions viewed from multiple directions based on the composite data including the CT data and the FS data after reflecting the simulation. While generating the rendering images including the upper and/or lower teeth row in two dimensions viewed from the multiple directions based on the rendering image using the CT data and the FS data as described above, data generation apparatus 10 performs rough pattern matching between the upper and/or lower teeth row image included in each of the frame images extracted in S5 and an upper and/or lower teeth row image included in each of the rendering images (S74) and further performs detailed pattern matching between the upper and/or lower teeth row image included in each of the frame images extracted in S5 and the upper and/or lower teeth row image included in each of the rendering images (S75).

Then, based on the viewpoints of camera 20 in the horizontal direction and the vertical direction of the upper and/or lower teeth row image included in each frame image extracted through the pattern matching in S74 and S75, data generation apparatus 10 generates each rendering image corresponding to the upper and/or lower teeth row image included in each frame image (S76).

Data generation apparatus 10 cuts out an image corresponding to the oral cavity part including the upper and/or lower teeth row extracted from each of the frame images in S5 from each of generated rendering images Ra, Rb, Rc, and Rd (S77). Each of rendering images Ra, Rb, Rc, and Rd is the image generated based on the CT data and the FS data. Thus, the simulation image cut out from each of the rendering images Ra, Rb, Rc, and Rd includes the soft tissue part after the upper and/or lower teeth row and the jawbone of the subject are deformed.

Data generation apparatus 10 converts an image of the face part to be converted in each frame image to the image of the face part including the upper and/or lower teeth row cutout from the rendering image in S77 and performs the process to smoothly connect the joint between the converted face part and an unconverted face part to generate simulation moving image data showing the face of the subject reflecting the simulation result and stores the simulation moving image data in storage device 12 (S78).

Data generation apparatus 10 generates a smile simulation result based on the simulation moving image data stored in storage device 12 and outputs the generated simulation result (S79).

As described above, data generation apparatus 10 according to the fifth embodiment can generate the rendering image that more precisely represents the shape, position, and the like of the oral cavity part including the upper and/or lower teeth row in two dimensions using not only the CT data obtained by the CT imaging device, but also the FS data obtained by the facial data measurement device, and cut out the simulation image including the soft tissue part after the upper and/or lower teeth row and the jawbone of the subject are deformed from the rendering image. This enables data generation apparatus 10 to accurately generate the simulation moving image data of the subject smiling, the data reflecting the simulation result in which the jawbone is also deformed in addition to the upper and/or lower teeth row, based on the moving image data of the subject obtained by camera 20 and the rendering image.

In both of data generation apparatuses 10 according to the second and third embodiments, the CT data obtained by the CT imaging device and the FS data obtained by the facial data measurement device may be employed as the three-dimensional data input to data generation apparatus 10. In this case, in both of data generation apparatuses 10 according to the second and third embodiments, the rendering image may be generated by executing the processes of S71 to S76 of the data generation process according to the fifth embodiment illustrated in Fig. 20.

### <Sixth Embodiment>

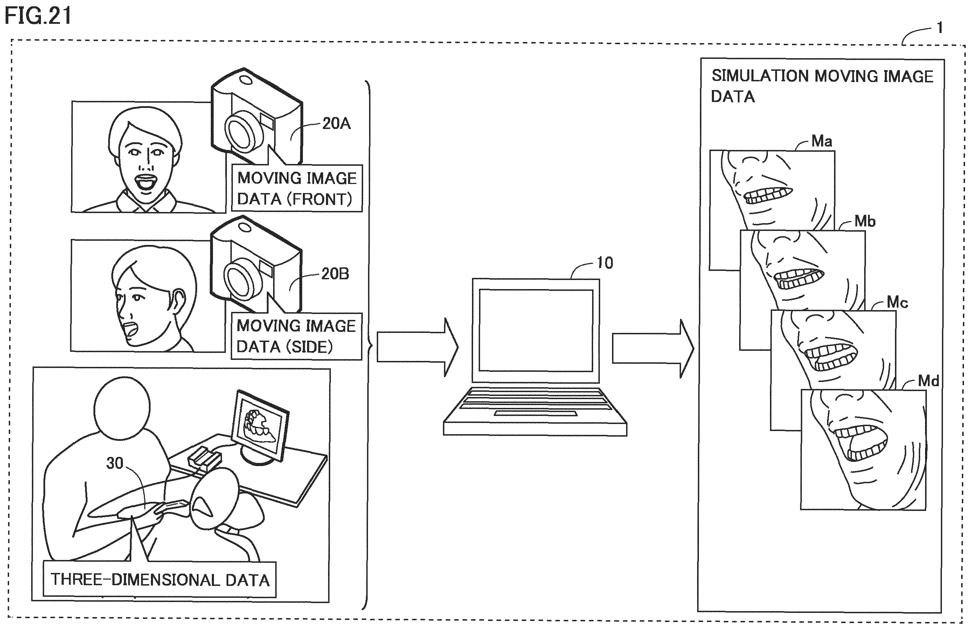

Data generation apparatus 10 according to a sixth embodiment of the present disclosure will be described in detail with reference to Fig. 21. In data generation apparatus 10 according to the sixth embodiment, only differences from data generation apparatus 10 according to the first embodiment will be described, and the same parts as those in data generation apparatus 10 according to the first embodiment will be designated by the same reference signs as those in the first embodiment to omit repetitive description.

In data generation apparatus 10 according to the sixth embodiment, camera 20 is configured to capture moving images of the object to be photographed (e.g., the face of the subject) from a plurality of viewpoints. For example, Fig. 21 is a diagram illustrating an application example of data generation system 1 and data generation apparatus 10 according to the sixth embodiment. As illustrated in Fig. 21, data generation system 1 according to the sixth embodiment includes a camera 20A that photographs the face of the subject from substantially the front of the subject (e.g., the front of the face of the subject) and a camera 20B that photographs the face of the subject from substantially the side of the subject (e.g., the side of the face of the subject).

Data generation apparatus 10 may execute pattern matching (e.g., the processes of S7 and S8 of Fig. 3) using an upper and/or lower teeth row image extracted from each of the frame images constituting moving image data obtained by camera 20A and an upper and/or lower teeth row image extracted from each of the frame images constituting moving image data obtained by camera 20B. At this time, data generation apparatus 10 may preferentially use the moving image data with a higher pattern matching accuracy between the moving image data obtained by camera 20A and the moving image data obtained by camera 20B.

For example, camera 20A photographs the face of the subject from the front of the face of the subject, and the shape in the horizontal direction of the upper and/or lower teeth row extracted from each frame image is more likely to be accurately represented. Thus, data generation apparatus 10 may execute pattern matching in the horizontal direction in S8 by preferentially using the upper and/or lower teeth row image extracted from each of the frame images constituting the moving image data obtained by camera 20A.

Camera 20B photographs the face of the subject from the side of the face of the subject, and the shape in the vertical direction of the upper and/or lower teeth row extracted from each frame image is more likely to be accurately represented. Thus, data generation apparatus 10 may execute pattern matching in the vertical direction by preferentially using the upper and/or lower teeth row image extracted from each of the frame images constituting the moving image data obtained by camera 20B.

As described above, data generation apparatus 10 according to the sixth embodiment can accurately generate simulation moving image data of the subject smiling, the data reflecting the simulation result, using the moving image data obtained by photographing the object to be photographed from the plurality of viewpoints.

The camera may be disposed not substantially forward of the subject or substantially sideward of the subject, but substantially diagonally forward of the subject. That is, data generation system 1 may include one camera disposed at any one of the positions substantially forward of the subject, substantially diagonally forward of the subject, and substantially sideward of the subject or may include a plurality of cameras disposed at any two or more of the positions substantially forward of the subject, substantially diagonally forward of the subject, and substantially sideward of the subject. Data generation apparatus 10 may obtain moving image data from a plurality of cameras that simultaneously photograph the subject from a plurality of viewpoints and execute pattern matching (e.g., the processes of S7 and S8 of Fig. 3) using the moving image data obtained from the plurality of cameras.

### <Seventh Embodiment>

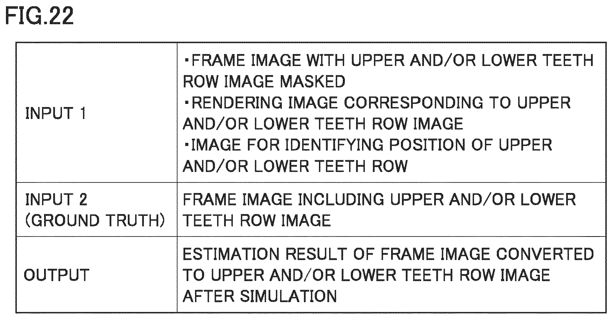

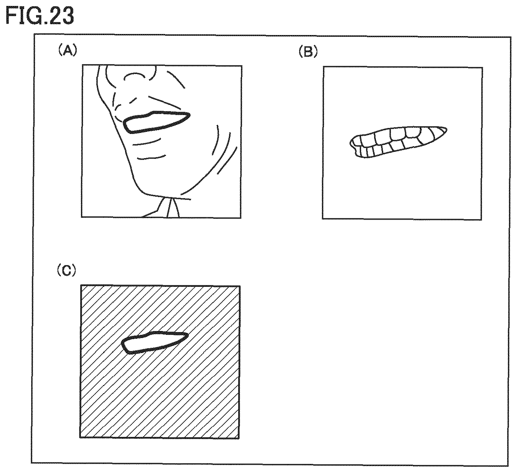

Data generation apparatus 10 according to a seventh embodiment of the present disclosure will be described in detail with reference to Figs. 22 and 23. In data generation apparatus 10 according to the seventh embodiment, only differences from data generation apparatus 10 according to the third embodiment will be described, and the same parts as those in data generation apparatus 10 according to the third embodiment will be designated by the same reference signs as those in the third embodiment to omit repetitive description.

When data generation apparatus 10 according to the seventh embodiment converts a part of each frame image in which the upper and/or lower teeth row image is shown to a part corresponding to the upper and/or lower teeth row image cut out from the rendering image, data generation apparatus 10 performs the process to smoothly connect the joint between the converted part corresponding to the upper and/or lower teeth row and an unconverted part other than the upper and/or lower teeth row and add the lightness and shade of the teeth row in accordance with the lightness and shade of the face more naturally using AI.

Fig. 22 is a diagram for describing an input and an output of supervised learning in the data generation apparatus 10 according to the seventh embodiment. As illustrated in Fig. 22, a frame image with an upper and/or lower teeth row image masked, a rendering image corresponding to the upper and/or lower teeth row image, and an image for identifying the position of the upper and/or lower teeth row are used as an input 1 which is problem data of machine learning.

For example, Fig. 23 is a diagram illustrating an example of input data of the supervised learning in the data generation apparatus 10 according to the seventh embodiment. As illustrated in (A) of Fig. 23, based on the frame image included in the moving image data, the frame image with the upper and/or lower teeth row image masked is generated and used as input 1. As illustrated in (B) of Fig. 23, based on three-dimensional data of the upper and/or lower teeth row reflecting the simulation result, the rendering image is generated by extracting only a part corresponding to the upper and/or lower teeth row image of the frame image and used as input 1. As illustrated in (C) of Fig. 23, based on the frame image included in the moving image data, the image for identifying the position of the upper and/or lower teeth row image in the frame image is generated and used as input 1.

As illustrated in Fig. 22, the frame image including the upper and/or lower teeth row image included in the moving image data is used as an input 2 which is ground truth data of the machine learning. That is, the frame image showing the upper and/or lower teeth row in a natural state before the simulation is used as input 2. An estimation result of the frame image in which the upper and/or lower teeth row image after the simulation is converted to an image having natural shading and color like the upper and/or lower teeth row image before the simulation is used as an output that data generation apparatus 10 estimates based on input 1.

In a learning phase, based on the frame image with the upper and/or lower teeth row image masked illustrated in (A) of Fig. 23, the rendering image corresponding to the upper and/or lower teeth row image illustrated in (B) of Fig. 23, and the image for identifying the position of the upper and/or lower teeth row illustrated in (C) of Fig. 23 (input 1), data generation apparatus 10 estimates an estimation result of the frame image in which the upper and/or lower teeth row image after the simulation is converted to the upper and/or lower teeth row image before the simulation, that is, the frame image in which the upper and/or lower teeth row image illustrated in (B) of Fig. 23 is superimposed in a natural state on the masked part of the image illustrated in (A) of Fig. 23 (output), and compares the estimated frame image (output) with the frame image showing the upper and/or lower teeth row in a natural state before the simulation (input 2). Data generation apparatus 10 does not update the parameter included in estimation model 130 when these images match and updates the parameter included in estimation model 130 so that these images match when these images do not match, thereby optimizing estimation model 130. Learned estimation model 130 machine-learned in this manner is stored in storage device 12 as data generation program 100. In a utilization phase, based on the frame image including the upper and/or lower teeth row image included in the moving image data and the rendering image of the upper and/or lower teeth row reflecting the simulation result, data generation apparatus 10 estimates the frame image with the upper and/or lower teeth row image superimposed thereon in a natural state. In the frame image including the upper and/or lower teeth row after the simulation estimated in this manner, the joint between the converted part corresponding to the upper and/or lower teeth row and the unconverted part other than the upper and/or lower teeth row is smoothly connected, and the lightness and shade of the teeth row are added in accordance with the lightness and shade of the face. In addition, the upper and/or lower teeth row part reflecting the simulation result is adjusted in brightness so as to represent irregularities on the surface of the upper and/or lower teeth row in a natural state. Determination of the match between the frame image (output) and the frame image (input 2) as described above may determine the degree of match of image naturalness.

### <Modifications>

The present disclosure is not limited to the embodiments described above, and various modifications and applications can further be made. Hereinbelow, modifications applicable to the present disclosure will be described.

In data generation apparatus 10, camera 20 may include a three-dimensional camera capable of detecting three-dimensional position coordinates of the object to be photographed. For example, camera 20 may include a time of flight (ToF) depth camera capable of detecting the three-dimensional position coordinates of the object to be photographed by measuring the distance to the object to be photographed using reflection of light (e.g., infrared rays) or a stereo camera capable of detecting the three-dimensional position coordinates of the object to be photographed by a plurality of cameras (e.g., two cameras) photographing the same space from different positions. That is, the moving image data input to data generation apparatus 10 includes three-dimensional data that is positional information (coordinates of vertical-direction, horizontal-direction, and height-direction axes) of each of grouped points (a plurality of points) showing the surface of the upper and/or lower teeth row of the subject, that is, the object to be photographed.

Data generation apparatus 10 may be a cloud server apparatus. That is, arithmetic device 11 (arithmetic unit) may have a function as the cloud server apparatus. For example, the user or the subject himself/herself may take an image of the face of the subject using a user terminal such as a smartphone, and upload moving image data obtained by photographing the subject and three-dimensional data of the upper and/or lower teeth row of the subject to cloud data generation apparatus 10 for registration. Then, data generation apparatus 10 may generate simulation moving image by converting the upper and/or lower teeth row image included in the frame image of the moving image data to the upper and/or lower teeth row image after the simulation cut out from the rendering image and distribute the generated simulation moving image to the user terminal so that the user or the subject can view or save the simulation moving image using the user terminal.

When data generation apparatus 10 generates the rendering image based on the three-dimensional data reflecting the simulation result, data generation apparatus 10 may perform an optical simulation using a plurality of light sources based on the depth of the upper and/or lower teeth row corresponding to irregularities on the surface of the upper and/or lower teeth row to generate the rendering image. Accordingly, the brightness of the upper and/or lower teeth row shown by the rendering image is adjusted in accordance with the irregularities on the surface of the upper and/or lower teeth. Thus, data generation apparatus 10 can represent the upper and/or lower teeth row after the simulation in a more natural state on the rendering image.

As illustrated in Fig. 13, the simulation moving image data includes the plurality of frame images Ma, Mb, Mc, and Md. Thus, data generation apparatus 10 may generate the plurality of frame images Ma, Mb, Mc, and Md showing the face of the subject reflecting the simulation result based on the simulation moving image data and display generated frame images Ma, Mb, Mc, and Md on display 40.

Data generation system 1 and data generation apparatus 10 according to each of the first to seventh embodiments described above may include the configurations and functions of the other embodiments alone or in combination.

It should be understood that the embodiments disclosed herein are not restrictive but illustrative in all aspects. The scope of the present disclosure is defined by the appended claims rather than the foregoing description. The configurations illustrated in the embodiments and the configurations illustrated in the modifications may be combined as appropriate.

## Claims

1. A data generation apparatus (10) configured to generate simulation moving image data showing a face of a subject reflecting a simulation result of dental treatment, the data generation apparatus comprising:
an input unit (13, 14) to which moving image data obtained by photographing the subject with a partial teeth row of an upper and/or lower teeth row exposed and three-dimensional data of the upper and/or lower teeth row of the subject are input; and
an arithmetic unit (11) configured to generate from the three-dimensional data of the upper and/or lower teeth row of the subject three-dimensional data of the upper and/or lower teeth row reflecting the simulation result and to generate the simulation moving image data showing the face of the subject reflecting the simulation result of dental treatment based on the partial teeth row included in each of a plurality of frame images constituting the moving image data and the three-dimensional data of the upper and/or lower teeth row reflecting the simulation result, wherein
the arithmetic unit (11) is configured to
generate a plurality of rendering images including the upper and/or lower teeth row in two dimensions viewed from multiple directions based on the three-dimensional data reflecting the simulation result;
determine one rendering image out of the plurality of rendering images for each one of the frame images based on the three-dimensional data of the upper and/or lower teeth row reflecting the simulation result that corresponds to the partial teeth row included in the respective frame image, and
cut out from each of the generated rendering images a part corresponding to the upper and/or lower teeth row image that corresponds to the partial teeth row included in the respective frame image; and
convert a part of each frame image in which the upper and/or lower teeth row image is shown to the corresponding part of the upper and/or lower teeth row of the respective cut-out of the rendering image reflecting the simulation result; and
output a plurality of frame images including the corresponding part of the upper and/or lower teeth row of the respective cut-out of the rendering image reflecting the simulation result to generate the simulation moving image data.

2. The data generation apparatus according to claim 1, wherein the arithmetic unit generates the simulation moving image data following input of the moving image data to the input unit during photographing of the subject.

3. The data generation apparatus according to claim 1, wherein the arithmetic unit converts the image of the partial teeth row that is included in each of the plurality of frame images and does not reflect the simulation result to the image of the partial teeth row of the upper and/or lower teeth row that is included in the at least one rendering image and reflects the simulation result based on input data including the at least one rendering image and the plurality of frame images using an estimation model (130).

4. The data generation apparatus according to claim 1, wherein, when converting the image of the partial teeth row that is included in each of the plurality of frame images and does not reflect the simulation result to the image of the partial teeth row of the upper and/or lower teeth row that is included in the at least one rendering image and reflects the simulation result, the arithmetic unit deforms a jawbone of the subject in accordance with the upper and/or lower teeth row in the at least one rendering image and smoothly connects a joint between the converted part and the unconverted part in the simulation moving image data.

5. The data generation apparatus according to claim 1, wherein the arithmetic unit performs an optical simulation using a plurality of light sources based on a depth of the upper and/or lower teeth row to generate the at least one rendering image.

6. The data generation apparatus according to claim 2, wherein the arithmetic unit generates a plurality of frame images showing the face of the subject reflecting the simulation result based on the simulation moving image data.

7. The data generation apparatus according to claim 1, wherein the moving image data includes moving image data obtained by photographing using at least one of a monocular camera, a stereo camera, and a depth camera.

8. The data generation apparatus according to claim 1, wherein, based on input data including a frame image constituting the moving image data, the arithmetic unit estimates an area of the partial teeth row in the frame image using an estimation model for estimating the area of the partial teeth row in the frame image based on the input data.

9. The data generation apparatus according to claim 1, wherein, based on input data including a shape of the partial teeth row included in a frame image constituting the moving image data and the three-dimensional data of the upper and/or lower teeth row, the arithmetic unit estimates a rendering image corresponding to the partial teeth row using an estimation model for estimating the rendering image corresponding to the partial teeth row included in the frame image based on the input data.

10. The data generation apparatus according to claim 1, wherein the three-dimensional data input to the input unit includes at least one of three-dimensional data including positional information of each of grouped points showing a surface of the upper and/or lower teeth row, three-dimensional data obtained by taking a computed tomographic image of the upper and/or lower teeth row, and three-dimensional data showing a shape of a surface of the face of the subject.

11. The data generation apparatus according to claim 1, wherein
a color temperature of a light source used in photographing the subject is input to the input unit, and
the arithmetic unit generates the simulation moving image data based on the color temperature.

12. The data generation apparatus according to claim 1, wherein the arithmetic unit has a function as a cloud server apparatus.

13. A data generation method for generating simulation moving image data showing a face of a subject reflecting a simulation result of dental treatment by a computer (11), the data generation method comprising:
as a process executed by the computer:
inputting moving image data obtained by photographing the subject with a partial teeth row of an upper and/or lower teeth row exposed and three-dimensional data of the upper and/or lower teeth row of the subject;
generating from the three dimensional data of the upper and/or lower teeth row of the subject three-dimensional data of the upper and/or lower teeth row reflecting the simulation result; and
generating the simulation moving image data showing the face of the subject reflecting the simulation result of dental treatment based on the partial teeth row included in each of a plurality of frame images constituting the moving image data and the three-dimensional data of the upper and/or lower teeth row reflecting the simulation result, wherein
in generating simulation moving image data:
generating a plurality of rendering images including the upper and/or lower teeth row in two dimensions viewed from multiple directions based on the three-dimensional data reflecting the simulation result;
determining one rendering image out of the plurality of rendering images for each one of the frame images based on the three-dimensional data of the upper and/or lower teeth row reflecting the simulation result that corresponds to the partial teeth row included in the respective frame image, and
cutting out from each of the generated rendering images a part corresponding to the upper and/or lower teeth row image that corresponds to the partial teeth row included in the respective frame image;
converting a part of each frame image in which the upper and/or lower teeth row image is shown to the corresponding part of the upper and/or lower teeth row of the respective cut-out of the rendering image reflecting the simulation result; and
outputting a plurality of frame images including the corresponding part of the upper and/or lower teeth row of the respective cut-out of the rendering image reflecting the simulation result to generate the simulation moving image data.

14. A data generation program (100) for generating simulation moving image data showing a face of a subject reflecting a simulation result of dental treatment, the data generation program causing a computer (11) to execute the method according to claim 13.

## Patentansprüche

1. Datenerzeugungsvorrichtung (10), die konfiguriert ist, um Bewegungssimulationsbilddaten zu erzeugen, die ein Gesicht eines Subjekts zeigen, das ein Simulationsergebnis einer Zahnbehandlung widerspiegelt, wobei die Datenerzeugungsvorrichtung aufweist:
eine Eingabeeinheit (13, 14), in die Bewegtbilddaten, die durch Fotografieren des Subjekts mit einer freigelegten Teilzahnreihe einer oberen und/oder unteren Zahnreihe erhalten werden, und dreidimensionale Daten der oberen und/oder unteren Zahnreihe des Subjekts eingegeben werden; und
eine Arithmetikeinheit (11), die konfiguriert ist, um aus den dreidimensionalen Daten der oberen und/oder unteren Zahnreihe des Subjekts dreidimensionale Daten der oberen und/oder unteren Zahnreihe zu erzeugen, die das Simulationsergebnis widerspiegeln, und um die Bewegungssimulationsbilddaten zu erzeugen, die das Gesicht des Subjekts zeigen, das das Simulationsergebnis einer Zahnbehandlung widerspiegelt, basierend auf der Teilzahnreihe, die in jedem einer Vielzahl von Einzelbildern enthalten ist, die die Bewegungsbilddaten bilden, und den dreidimensionalen Daten der oberen und/oder unteren Zahnreihe, die das Simulationsergebnis widerspiegeln, wobei
die Arithmetikeinheit (11) konfiguriert ist, um
eine Vielzahl von Wiedergabebildern zu erzeugen, die die obere und/oder untere Zahnreihe in zwei Dimensionen, aus mehreren Richtungen betrachtet, basierend auf den dreidimensionalen Daten, die das Simulationsergebnis widerspiegeln, enthalten;
ein Wiedergabebild aus der Vielzahl von Wiedergabebildern für jedes der Einzelbilder basierend auf den dreidimensionalen Daten der oberen und/oder unteren Zahnreihe zu bestimmen, die das Simulationsergebnis widerspiegeln, das der Teilzahnreihe entspricht, die in dem jeweiligen Einzelbild enthalten ist, und
aus jedem der erzeugten Wiedergabebilder einen Teil herauszuschneiden, der dem oberen und/oder unteren Zahnreihenbild entspricht, das der Teilzahnreihe entspricht, die in dem jeweiligen Einzelbild enthalten ist; und
einen Teil jedes Einzelbilds, in dem das obere und/oder untere Zahnreihenbild gezeigt ist, in den entsprechenden Teil der oberen und/oder unteren Zahnreihe des jeweiligen Ausschnitts des Wiedergabebilds umzuwandeln, das das Simulationsergebnis widerspiegelt; und
eine Vielzahl von Einzelbildern auszugeben, die den entsprechenden Teil der oberen und/oder unteren Zahnreihe des jeweiligen Ausschnitts des Wiedergabebilds enthalten, das das Simulationsergebnis widerspiegelt, um die Bewegungssimulationsbilddaten zu erzeugen.

2. Datenerzeugungsvorrichtung nach Anspruch 1, wobei die Arithmetikeinheit die Bewegungssimulationsbilddaten nach der Eingabe der Bewegungsbilddaten in die Eingabeeinheit während des Fotografierens des Subjekts erzeugt.

3. Datenerzeugungsvorrichtung nach Anspruch 1, wobei die Arithmetikeinheit das Bild der Teilzahnreihe, das in jedem der Vielzahl von Einzelbildern enthalten ist und das Simulationsergebnis nicht widerspiegelt, in das Bild der Teilzahnreihe der oberen und/oder unteren Zahnreihe umwandelt, das in dem mindestens einen Wiedergabebild enthalten ist, und das Simulationsergebnis basierend auf Eingabedaten widerspiegelt, die das mindestens eine Wiedergabebild und die Vielzahl von Einzelbildern unter Verwendung eines Schätzmodells (130) enthalten.

4. Datenerzeugungsvorrichtung nach Anspruch 1, wobei, wenn das Bild der Teilzahnreihe, das in jedem der Vielzahl von Einzelbildern enthalten ist und das Simulationsergebnis nicht widerspiegelt, in das Bild der Teilzahnreihe der oberen und/oder unteren Zahnreihe umgewandelt wird, das in dem mindestens einen Wiedergabebild enthalten ist und das Simulationsergebnis widerspiegelt, die Arithmetikeinheit einen Kieferknochen des Subjekts gemäß der oberen und/oder unteren Zahnreihe in dem mindestens einen Wiedergabebild verformt und eine Verbindung zwischen dem umgewandelten Teil und dem nicht umgewandelten Teil in den Bewegungssimulationsbilddaten glatt verbindet.

5. Datenerzeugungsvorrichtung nach Anspruch 1, wobei die Arithmetikeinheit eine optische Simulation unter Verwendung einer Vielzahl von Lichtquellen basierend auf einer Tiefe der oberen und/oder unteren Zahnreihe durchführt, um das mindestens eine Wiedergabebild zu erzeugen.

6. Datenerzeugungsvorrichtung nach Anspruch 2, wobei die Arithmetikeinheit eine Vielzahl von Einzelbildern erzeugt, die das Gesicht des Subjekts zeigen, das das Simulationsergebnis basierend auf den Bewegungssimulationsbilddaten widerspiegelt.

7. Datenerzeugungsvorrichtung nach Anspruch 1, wobei die Bewegungsbilddaten Bewegungsbilddaten enthalten, die durch Fotografieren unter Verwendung von mindestens einer von einer monokularen Kamera, einer Stereokamera und einer Tiefenkamera erhalten werden.

8. Datenerzeugungsvorrichtung nach Anspruch 1, wobei die Arithmetikeinheit basierend auf Eingabedaten, die ein Einzelbild enthalten, das die Bewegungsbilddaten bildet, einen Bereich der Teilzahnreihe in dem Einzelbild unter Verwendung eines Schätzmodells zum Schätzen des Bereichs der Teilzahnreihe in dem Einzelbild basierend auf den Eingabedaten schätzt.

9. Datenerzeugungsvorrichtung nach Anspruch 1, wobei die Arithmetikeinheit basierend auf Eingabedaten, die eine Form der Teilzahnreihe enthalten, die in einem Einzelbild enthalten ist, das die Bewegungsbilddaten bildet, und den dreidimensionalen Daten der oberen und/oder unteren Zahnreihe ein Wiedergabebild, das der Teilzahnreihe entspricht, unter Verwendung eines Schätzmodells zum Schätzen des Wiedergabebilds, das der Teilzahnreihe entspricht, die in dem Einzelbild enthalten ist, basierend auf den Eingabedaten schätzt.

10. Datenerzeugungsvorrichtung nach Anspruch 1, wobei die dreidimensionalen Daten, die in die Eingabeeinheit eingegeben werden, mindestens eines von dreidimensionalen Daten, die Positionsinformationen von jedem von gruppierten Punkten enthalten, die eine Oberfläche der oberen und/oder unteren Zahnreihe zeigen, dreidimensionalen Daten, die durch Aufnehmen eines berechneten tomografischen Bilds der oberen und/oder unteren Zahnreihe erhalten werden, und dreidimensionalen Daten, die eine Form einer Oberfläche des Gesichts des Subjekts zeigen, enthalten.

11. Datenerzeugungsvorrichtung nach Anspruch 1, wobei
eine Farbtemperatur einer Lichtquelle, die beim Fotografieren des Subjekts verwendet wird, in die Eingabeeinheit eingegeben wird, und
die Arithmetikeinheit die Bewegungssimulationsbilddaten basierend auf der Farbtemperatur erzeugt.

12. Datenerzeugungsvorrichtung nach Anspruch 1, wobei die Arithmetikeinheit eine Funktion als eine Cloud-Server-Vorrichtung besitzt.

13. Datenerzeugungsverfahren zum Erzeugen von Bewegungssimulationsbilddaten, die ein Gesicht eines Subjekts zeigen, das ein Simulationsergebnis einer Zahnbehandlung widerspiegelt, durch einen Computer (11), wobei das Datenerzeugungsverfahren aufweist:
als einen Prozess, der durch den Computer ausgeführt wird:
Eingeben von Bewegtbilddaten, die durch Fotografieren des Subjekts mit einer freigelegten Teilzahnreihe einer oberen und/oder unteren Zahnreihe erhalten werden, und dreidimensionalen Daten der oberen und/oder unteren Zahnreihe des Subjekts;
Erzeugen von dreidimensionalen Daten der oberen und/oder unteren Zahnreihe, die das Simulationsergebnis widerspiegeln, aus den dreidimensionalen Daten der oberen und/oder unteren Zahnreihe des Subjekts; und
Erzeugen der Bewegungssimulationsbilddaten, die das Gesicht des Subjekts zeigen, das das Simulationsergebnis einer Zahnbehandlung widerspiegelt, basierend auf der Teilzahnreihe, die in jedem einer Vielzahl von Einzelbildern enthalten ist, die die Bewegungsbilddaten bilden, und den dreidimensionalen Daten der oberen und/oder unteren Zahnreihe, die das Simulationsergebnis widerspiegeln, wobei
beim Erzeugen von Bewegungssimulationsbilddaten:
eine Vielzahl von Wiedergabebildern erzeugt wird, die die obere und/oder untere Zahnreihe in zwei Dimensionen, aus mehreren Richtungen betrachtet, basierend auf den dreidimensionalen Daten, die das Simulationsergebnis widerspiegeln, enthalten;
ein Wiedergabebild aus der Vielzahl von Wiedergabebildern für jedes der Einzelbilder basierend auf den dreidimensionalen Daten der oberen und/oder unteren Zahnreihe bestimmt wird, die das Simulationsergebnis widerspiegeln, das der Teilzahnreihe entspricht, die in dem jeweiligen Einzelbild enthalten ist, und
aus jedem der erzeugten Wiedergabebilder ein Teil herausgeschnitten wird, der dem oberen und/oder unteren Zahnreihenbild entspricht, das der Teilzahnreihe entspricht, die in dem jeweiligen Einzelbild enthalten ist;
ein Teil jedes Einzelbilds, in dem das obere und/oder untere Zahnreihenbild gezeigt ist, in den entsprechenden Teil der oberen und/oder unteren Zahnreihe des jeweiligen Ausschnitts des Wiedergabebilds umgewandelt wird, das das Simulationsergebnis widerspiegelt; und
eine Vielzahl von Einzelbildern ausgegeben wird, die den entsprechenden Teil der oberen und/oder unteren Zahnreihe des jeweiligen Ausschnitts des Wiedergabebilds enthalten, das das Simulationsergebnis widerspiegelt, um die Bewegungssimulationsbilddaten zu erzeugen.

14. Datenerzeugungsprogramm (100) zum Erzeugen von Bewegungssimulationsbilddaten, die ein Gesicht eines Subjekts zeigen, das ein Simulationsergebnis einer Zahnbehandlung widerspiegelt, wobei das Datenerzeugungsprogramm einen Computer (11) veranlasst, das Verfahren nach Anspruch 13 auszuführen.

## Revendications

1. Appareil de génération de données (10) configuré pour générer des données d'images animées de simulation montrant un visage d'un sujet reflétant un résultat de simulation de traitement dentaire, l'appareil de génération de données comprenant :
une unité d'entrée (13, 14) dans laquelle sont entrées des données d'images animées obtenues en photographiant le sujet avec une rangée de dents partielle d'une rangée de dents supérieure et/ou inférieure exposée et des données tridimensionnelles de la rangée de dents supérieure et/ou inférieure du sujet ; et
une unité arithmétique (11) configurée pour générer à partir des données tridimensionnelles de la rangée de dents supérieure et/ou inférieure du sujet des données tridimensionnelles de la rangée de dents supérieure et/ou inférieure reflétant le résultat de simulation et pour générer les données d'images animées de simulation montrant le visage du sujet reflétant le résultat de simulation de traitement dentaire sur la base de la rangée de dents partielle comprise dans chacune d'une pluralité d'images de trame constituant les données d'images animées et les données tridimensionnelles de la rangée de dents supérieures et/ou inférieures reflétant le résultat de simulation, dans lequel
l'unité arithmétique (11) est configurée pour
générer une pluralité d'images de rendu comprenant la rangée de dents supérieure et/ou inférieure en deux dimensions vues depuis de multiples directions sur la base des données tridimensionnelles reflétant le résultat de simulation ;
déterminer une image de rendu parmi la pluralité d'images de rendu pour chacune des images de trame sur la base des données tridimensionnelles de la rangée de dents supérieure et/ou inférieure reflétant le résultat de simulation qui correspond à la rangée de dents partielle comprise dans l'image de trame respective, et
découper dans chacune des images de rendu générées une partie correspondant à l'image de rangée de dents supérieure et/ou inférieure qui correspond à la rangée de dents partielle comprise dans l'image de trame respective ; et
convertir une partie de chaque image de trame dans laquelle l'image de rangée de dents supérieure et/ou inférieure est montrée en la partie correspondante de la rangée de dents supérieure et/ou inférieure de la découpe respective de l'image de rendu reflétant le résultat de simulation ; et
émettre une pluralité d'images de trame comprenant la partie correspondante de la rangée de dents supérieure et/ou inférieure de la découpe respective de l'image de rendu reflétant le résultat de simulation pour générer les données d'images animées de simulation.

2. Appareil de génération de données selon la revendication 1, dans lequel l'unité arithmétique génère les données d'images animées de simulation suite à l'entrée des données d'images animées dans l'unité d'entrée pendant la photographie du sujet.

3. Appareil de génération de données selon la revendication 1, dans lequel l'unité arithmétique convertit l'image de la rangée de dents partielle qui est comprise dans chacune de la pluralité d'images de trame et ne reflète pas le résultat de simulation en l'image de la rangée de dents partielle de la rangée de dents supérieure et/ou inférieure qui est comprise dans l'au moins une image de rendu et reflète le résultat de simulation sur la base de données d'entrée comprenant l'au moins une image de rendu et la pluralité d'images de trame à l'aide d'un modèle d'estimation (130).

4. Appareil de génération de données selon la revendication 1, dans lequel, lors de la conversion de l'image de la rangée de dents partielle qui est comprise dans chacune de la pluralité d'images de trame et ne reflète pas le résultat de simulation en l'image de la rangée de dents partielle de la rangée de dents supérieure et/ou inférieure qui est comprise dans l'au moins une image de rendu et reflète le résultat de simulation, l'unité arithmétique déforme un os de la mâchoire du sujet conformément à la rangée de dents supérieure et/ou inférieure dans l'au moins une image de rendu et relie en continu un raccord entre la partie convertie et la partie non convertie dans les données d'images animées de simulation.

5. Appareil de génération de données selon la revendication 1, dans lequel l'unité arithmétique réalise une simulation optique à l'aide d'une pluralité de sources de lumière sur la base d'une profondeur de la rangée de dents supérieure et/ou inférieure pour générer l'au moins une image de rendu.

6. Appareil de génération de données selon la revendication 2, dans lequel l'unité arithmétique génère une pluralité d'images de trame montrant le visage du sujet reflétant le résultat de simulation sur la base des données d'images animées de simulation.

7. Appareil de génération de données selon la revendication 1, dans lequel les données d'images animées comprennent des données d'images animées obtenues par photographie à l'aide d'au moins un parmi un appareil photo monoculaire, un appareil photo stéréo et un appareil photo de profondeur.

8. Appareil de génération de données selon la revendication 1, dans lequel, sur la base de données d'entrée comprenant une image de trame constituant les données d'images animées, l'unité arithmétique estime une zone de la rangée de dents partielle dans l'image de trame à l'aide d'un modèle d'estimation pour estimer la zone de la rangée de dents partielle dans l'image de trame sur la base des données d'entrée.

9. Appareil de génération de données selon la revendication 1, dans lequel, sur la base de données d'entrée incluant une forme de la rangée de dents partielle comprise dans une image de trame constituant les données d'images animées et les données tridimensionnelles de la rangée de dents supérieure et/ou inférieure, l'unité arithmétique estime une image de rendu correspondant à la rangée de dents partielle à l'aide d'un modèle d'estimation pour estimer l'image de rendu correspondant à la rangée de dents partielle comprise dans l'image de trame sur la base des données d'entrée.

10. Appareil de génération de données selon la revendication 1, dans lequel l'entrée de données tridimensionnelles dans l'unité d'entrée comporte au moins une parmi des données tridimensionnelles comprenant des informations de position de chacun de points groupés montrant une surface de la rangée de dents supérieure et/ou inférieure, des données tridimensionnelles obtenues en prenant une image tomographique calculée de la rangée de dents supérieure et/ou inférieure, et des données tridimensionnelles montrant une forme d'une surface du visage du sujet.

11. Appareil de génération de données selon la revendication 1, dans lequel
une température de couleur d'une source de lumière utilisée dans la photographie du sujet est entrée dans l'unité d'entrée, et
l'unité arithmétique génère les données d'images animées de simulation sur la base de la température de couleur.

12. Appareil de génération de données selon la revendication 1, dans lequel l'unité arithmétique a une fonction d'appareil de serveur cloud.

13. Procédé de génération de données pour la génération de données d'images animées de simulation montrant un visage d'un sujet reflétant un résultat de simulation de traitement dentaire par un ordinateur (11), le procédé de génération de données comprenant :
en tant que processus exécuté par l'ordinateur :
l'entrée de données d'images animées obtenues en photographiant le sujet avec une rangée de dents partielle d'une rangée de dents supérieure et/ou inférieure exposée et de données tridimensionnelles de la rangée de dents supérieure et/ou inférieure du sujet ;
la génération à partir des données tridimensionnelles de la rangée de dents supérieure et/ou inférieure du sujet de données tridimensionnelles de la rangée de dents supérieure et/ou inférieure reflétant le résultat de simulation ; et
la génération des données d'images animées de simulation montrant le visage du sujet reflétant le résultat de simulation de traitement dentaire sur la base de la rangée de dents partielle comprise dans chacune d'une pluralité d'images de trame constituant les données d'images animées et des données tridimensionnelles de la rangée de dents supérieure et/ou inférieure reflétant le résultat de simulation, dans lequel
dans la génération de données d'images animées de simulation :
la génération d'une pluralité d'images de rendu comprenant la rangée de dents supérieure et/ou inférieure en deux dimensions vues depuis de multiples directions sur la base des données tridimensionnelles reflétant le résultat de simulation ;
la détermination d'une image de rendu parmi la pluralité d'images de rendu pour chacune des images de trame sur la base des données tridimensionnelles de la rangée de dents supérieure et/ou inférieure reflétant le résultat de simulation qui correspond à la rangée de dents partielle comprise dans l'image de trame respective, et
la découpe dans chacune des images de rendu générées d'une partie correspondant à l'image de rangée de dents supérieure et/ou inférieure qui correspond à la rangée de dents partielle comprise dans l'image de trame respective ;
la conversion d'une partie de chaque image de trame dans laquelle l'image de rangée de dents supérieure et/ou inférieure est montrée en la partie correspondante de la rangée de dents supérieure et/ou inférieure de la découpe respective de l'image de rendu reflétant le résultat de simulation ; et
la sortie d'une pluralité d'images de trame comprenant la partie correspondante de la rangée de dents supérieure et/ou inférieure de la découpe respective de l'image de rendu reflétant le résultat de simulation pour générer les données d'images animées de simulation.

14. Programme de génération de données (100) pour générer des données d'images animées de simulation montrant un visage d'un sujet reflétant un résultat de simulation de traitement dentaire, le programme de génération de données amenant un ordinateur (11) à exécuter le procédé selon la revendication 13.
